(19) Europäisches Patentamt
European Patent Office
Office européen des brevets

(11) **EP 3 640 050 B1**

(12) **EUROPEAN PATENT SPECIFICATION**

(45) Date of publication and mention of the grant of the patent:
**23.03.2022 Bulletin 2022/12**

(21) Application number: **18817049.2**

(22) Date of filing: **21.05.2018**

(51) International Patent Classification (IPC):
***B60C 9/00*** *(2006.01)* ***B32B 15/09*** *(2006.01)*
***B60C 5/01*** *(2006.01)* ***B60C 9/20*** *(2006.01)*
***B60C 15/04*** *(2006.01)* ***C09J 11/04*** *(2006.01)*
***C09J 11/08*** *(2006.01)* ***C09J 167/00*** *(2006.01)*
***B60C 5/00*** *(2006.01)* ***B60C 9/22*** *(2006.01)*
***D07B 1/06*** *(2006.01)* ***C09J 169/00*** *(2006.01)*
***C09J 167/03*** *(2006.01)*

(52) Cooperative Patent Classification (CPC):
(C-Sets available)
**B60C 5/007; B32B 15/09; B60C 5/01; B60C 9/22; B60C 9/2204; B60C 15/04; C09J 11/04; C09J 11/08; C09J 167/00; C09J 167/03; C09J 169/00; D07B 1/0666;** D07B 2201/2012; D07B 2201/2013; D07B 2205/2039 (Cont.)

(86) International application number:
**PCT/JP2018/019550**

(87) International publication number:
**WO 2018/230271 (20.12.2018 Gazette 2018/51)**

(54) **RESIN-METAL COMPOSITE MEMBER FOR TIRE, AND TIRE**

HARZ-METALL-VERBUNDSTOFFELEMENT FÜR REIFEN SOWIE REIFEN

ÉLÉMENT COMPOSITE RÉSINE ET MÉTAL POUR PNEUMATIQUE, ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2017 JP 2017118902**

(43) Date of publication of application:
**22.04.2020 Bulletin 2020/17**

(73) Proprietor: **Bridgestone Corporation**
**Tokyo 104-8340 (JP)**

(72) Inventors:
- **NAKAKITA, Yukinori**
**Tokyo 104-8340 (JP)**
- **FUDEMOTO, Hiroyuki**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A1- 2 990 220**
**WO-A1-2014/175452**
**WO-A1-2014/175453**
**WO-A1-2017/002872**
**JP-A- 2012 082 316**
**JP-A- 2013 053 211**
**JP-A- 2013 082 310**
**JP-A- 2013 082 311**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 640 050 B1

(52) Cooperative Patent Classification (CPC): (Cont.)

C-Sets
D07B 2205/2039, D07B 2801/18

## Description

Technical Field

The present invention relates to a resin-metal composite member for a tire, and a tire.

Background Art

Provision of a reinforcing belt member formed by helically winding a reinforcing cord that is a metal member around a tire main body (hereinafter also referred to as a "tire frame") has conventionally been carried out as an attempt to enhance the durability (for example, stress resistance, resistance to internal pressure, and rigidity) of the tire. In addition, beads, which work to fix a tire to a rim, are usually provided in the tire, and metal wires are used as bead wires.

A method has been proposed which includes covering metal members, such as the reinforcing cords or the bead wires, with a resin material, thereby improving the durability of adhesion between the metal member provided in the tire and the tire frame.

For example, a tire has been proposed which includes an annular tire frame formed of at least a thermoplastic resin material, the tire having a reinforcing cord member that is wound around an outer circumferential portion of the tire frame in a circumferential direction to form a reinforcing cord layer, and the thermoplastic resin material including at least a polyester-based thermoplastic elastomer (see, for example, Patent Document 1).

A composite reinforcing member has also been proposed which includes at least one reinforcing thread and a layer of a thermoplastic polymer composition, the layer of a thermoplastic polymer composition covering the thread or individually covering each thread or collectively covering several threads, the thermoplastic polymer composition including at least one thermoplastic polymer having a positive glass transition temperature, a poly(p-phenylene ether) and a functionalized unsaturated thermoplastic styrene (TPS) elastomer having a negative glass transition temperature, and the TPS elastomer bearing functional groups selected from epoxide groups, carboxyl groups, acid anhydride groups and ester groups (see, for example, Patent Document 2). Reference is also made to WO 2017/002872 which discloses a tire and a method for manufacturing the tire, EP 2990220 which discloses a tire comprising a tire frame and a reinforcing metal cord member and JP 2013-082311 which discloses a tire formed of a resin material.

[Patent Document 1] Japanese Patent Application Laid-open (JP-A) No. 2012-046025
[Patent Document 2] International Publication (WO) No. 2012/104281

SUMMARY OF INVENTION

<Problem to be Solved by Invention>

As described above, techniques whereby a metal member such as a reinforcing cord or a bead wire is covered with a resin material to improve adhesiveness to the tire frame are known. However, further improvement in durability of adhesion is requested from the viewpoint of improving the durability of tires.

In view of the above circumstances, the present invention addresses provision of a resin-metal composite member for a tire that is configured to be provided in a tire, that includes a metal member, and that has excellent adhesion durability.

<Means for Solving the Problem>

The foregoing problem can be solved by the present invention, including the following.

<1> A resin-metal composite member for a tire, including a metal member, an adhesion layer, and a covering resin layer in this order,

wherein the adhesion layer includes a polyester-based thermoplastic elastomer having a polar functional group, and at least one additive A selected from the group consisting of an amorphous resin including an ester bond, a polyester-based thermoplastic resin, and a filler, and a content ratio of the polyester-based thermoplastic elastomer having a polar functional group is 50% by mass or more with respect to the entire adhesion layer.

<Advantageous Effect of Invention>

According to the present invention, a resin-metal composite member for a tire can be provided which is configured to be provided in a tire, includes a metal member, and has excellent adhesion durability.

BRIEF DESCRIPTION OF THE DRAWINGS

Fig. 1A is a perspective view illustrating a cross-section of a part of a tire according to one embodiment of the present invention.
Fig. 1B is a cross-sectional view illustrating bead portions fitted to a rim.
Fig. 2 is a cross-sectional view taken along a tire rotation axis, illustrating a state in which a reinforcing cord member is embedded in a crown portion of a tire frame of a tire according to a first embodiment.
Fig. 3 is an explanatory view explaining an operation of providing a reinforcing cord member in a crown portion of a tire frame using a reinforcing cord member heating apparatus and rollers.

MODES FOR CARRYING OUT INVENTION

Specific embodiments of the present invention are described below in detail. However, the present invention is by no means limited to the following embodiments, and modifications may be made, as appropriate, within the purpose of the present invention

The term "resin" as used herein refers to a concept that includes thermoplastic resins, thermoplastic elastomers, and thermosetting resins, but does not include vulcanized rubber. In the descriptions of resins provided below, "same type" means that one resin has a common skeleton with a skeleton constituting a main chain of another resin, for example, an ester-based resin and another ester-based resin, or a styrene-based resin and another styrene-based resin.

Any numerical range specified using "to" in the present specification means a range including the values indicated before and after "to" as the lower and upper limit values.

In the present specification, the term "step" includes not only an independent step, but also any step that is not clearly distinguished from another step as long as the purpose of the specified step is achieved.

In the present specification, a "thermoplastic resin" means a polymer compound that does not have rubber-like elasticity and that has a property such that a material formed from the polymer compound softens and flows as the temperature increases, and becomes relatively hard and strong when cooled.

In the present specification, a "thermoplastic elastomer" means a copolymer including a hard segment and a soft segment. Examples of the thermoplastic elastomer include a copolymer that includes a polymer for forming a crystalline hard segment having a high melting point or a hard segment having a high cohesive force and a polymer for forming an amorphous soft segment having a low glass transition temperature. Examples of the thermoplastic elastomer include a polymer compound that has rubber-like elasticity and has a property such that a material formed from the polymer compound softens and flows as the temperature increases, and becomes relatively hard and strong when cooled.

In the present specification, the "hard segment" refers to a hard component that is harder than the soft segment, and the "soft segment" refers to a component that is softener than the hard component. The hard segment is preferably a molecule-restraining component that performs the function as a crosslinking point in a crosslinked rubber and that prevents plastic deformation by, for example, taking a crystal form. Examples of the hard segment include a segment having a structure including a rigid group, such as an aromatic group or an alicyclic group, in the main skeleton, and a segment having a structure that enables inter-molecular packing due to an inter-molecular hydrogen bonding or $\pi$-$\pi$ interaction. The soft segment is preferably a flexible component exhibiting rubber elasticity. An example of the soft segment is a segment that has a structure including a long-chain group (for example, a long-chain alkylene group) in the main chain, having a high degree of freedom in terms of molecular rotation, and having elasticity.

<Resin-metal Composite Member for Tire>

The resin-metal composite member for a tire (hereinafter also simply referred to as "resin-metal composite member") according to the present embodiment includes a metal member, an adhesion layer and a covering resin layer in this order. The adhesion layer includes a polyester-based thermoplastic elastomer having a polar functional group, and at least one additive A selected from the group consisting of an amorphous resin including an ester bond, a polyester-based thermoplastic resin, and a filler. The content ratio of the polyester-based thermoplastic elastomer having a polar functional group is 50% by mass or more with respect to the entire adhesion layer.

As described above, a metal member is used as a reinforcing cord of a reinforcing belt member that is provided by winding the reinforcing cord around the outer circumferential portion of a tire frame, or as a bead wire of a bead that works to fix the tire to a rim. Ordinary tire frames include an elastic material such as rubber or a resin. Metal members provided in tires, such as those described above, are requested to achieve improved adhesion to elastic materials, such as a tire frame, from the viewpoint of improving durability of the tires. Further, in resin-metal composite members in which a covering resin layer is provided n a surface of a metal member with an adhesion layer disposed therebetween,

improvement in the strength of the adhesion layer itself is also requested from the viewpoint of improving the durability of tires.

In consideration of the foregoing circumstances, the inventors have found that an excellent adhesion durability can be obtained by configuring a resin-metal composite member such that the resin-metal composite member includes an adhesion layer and a covering resin layer in this order on a surface of a metal member, and such that the adhesion layer includes a polyester-based thermoplastic elastomer having a polar functional group, and at least one additive A selected from the group consisting of an amorphous resin including an ester bond, a polyester-based thermoplastic resin, and a filler. The reason therefor is presumably as follows.

The term "polar functional group" refers to a group having chemical reactivity (also expressed as functionality) and causing uneven distribution of electric charge (also expressed as polarity) in the molecule. In In the present embodiment, the adhesion layer includes a polyester-based thermoplastic elastomer having a polar functional group at a content ratio of 50% by mass or more. It is presumable that the uneven distribution of electric charge due to the polar functional group causes an interaction between the polar functional group and a hydrated hydroxy group present on a surface of the metal member, thereby exerting an attraction force between the polar functional group and the hydroxy group, and that an excellent adhesion between the metal member and the adhesion layer is obtained as a consequence.

Further, it is presumable that provision of a covering resin layer onto the adhesion layer enables reduction of a difference in rigidity between the metal member and an elastic material such as a tire frame, and that the resin-metal composite member including the metal member to be provided in a tire is able to achieve excellent adhesion durability.

The resin layer includes an additive A. When a filler is included as an additive A, the filler increases the elasticity of the adhesion layer, thereby increasing the rigidity of the adhesion layer and improving the strength of the adhesion layer. When at least one of an amorphous resin including an ester bond or a polyester-based thermoplastic resin is included as an additive A, the resin included forms a discontinuous phase (that is, island regions in a sea-island structure) in a continuous phase (that is, the sea region in the sea-island structure) formed by the polyester-based thermoplastic elastomer having a polar functional group. In other words, the amorphous resin including an ester bond and the polyester-based thermoplastic resin are considered to be present in a granular shape in the adhesion layer, similar to the existence form of the filler. Therefore, at least one of the amorphous resin including an ester bond or the polyester-based thermoplastic resin increases the elasticity of the adhesion layer, which leads to an increase in the rigidity of the adhesion layer, which in turn leads to an increase in the strength.

It is presumable that the increase of the strength of the adhesion layer itself reduces, for example, occurrence of breakage of the adhesion layer and occurrence of sliding at an interface of the adhesion layer upon application of a stress to the adhesion layer, as a result of which a high durability of adhesion between the metal member and the adhesion can be obtained.

In the present embodiment, the covering resin layer preferably includes a polyester-based thermoplastic elastomer. In other words, it is preferable that both of the adhesion layer and the covering resin layer include the same type of polyester-based thermoplastic elastomer. This configuration provides excellent compatibility between the material for the adhesion layer (mainly, an adhesive) and the material for the covering resin layer (mainly, a resin), and enables application of the resin with high affinity to a surface of the adhesion layer when the surface is coated with the resin, as a result of which a high adhesion property between the adhesion layer and the covering resin layer is obtained.

Respective members for forming the resin-metal composite member are described below in detail.

The resin-metal composite member has a structure including a metal member, an adhesion layer, and a covering resin layer, which are disposed in this order. The shape of the resin-metal composite member is not particularly limited, and examples of the shape of the resin-metal composite member include a cord shape and a sheet shape.

Examples of uses of the resin-metal composite member include a reinforcing belt member to be disposed at a crown portion (i.e., an outer circumferential portion) of a tire frame included in a tire, and a bead member that has a role of fixing the tire to a rim.

For example, an example of use of the resin-metal composite member as a reinforcing belt member is a belt layer formed by disposing one or more cord-shaped resin-metal composite members on the outer circumferential portion of a tire frame so as to run in the tire circumferential direction. Alternatively, the resin-metal composite member may be used, for example, as an oblique intersection belt layer in which plural cord-shaped resin-metal composite members are disposed at an angle to the tire circumferential direction so as to intersect with each other.

The structure of the resin-metal composite member, in which a metal member, an adhesion layer, and a covering resin layer are provided in this order, encompasses a state in which the entire surface of the metal member is covered with the covering resin layer with the adhesion layer disposed therebetween, and a state in which at least a part of the surface of the metal member is covered with the covering resin layer with the adhesion layer disposed therebetween. It is preferable that a structure in which a metal member, an adhesion layer having a larger tensile modulus of elasticity than that of a covering resin layer, and the covering resin layer are disposed in this order is formed at least over a region at which the resin-metal composite member contacts an elastic member such as a tire frame. The resin-metal composite member may further include another layer, in addition to the metal member, the adhesion layer, and the covering resin

layer; nevertheless, from the viewpoint of adhesion property between the metal member and the covering resin layer, the metal member and the adhesion layer should directly contact each other in at least a portion, and the adhesion layer and the covering resin layer should directly contact each other in at least a portion.

[Metal Member]

The metal member is not particularly limited, and, for example, metal cords used in conventional rubber tires may be used, as appropriate. Examples of the metal cords include a monofilament (i.e., a single filament) each formed of a single metal cord, and a multifilament (i.e., a stranded filament), in which plural metal fibers are stranded. The shape of the metal member is not limited to a linear shape (i.e., a cord shape), and the metal member may be a plate-shaped metal member, for example.

In the present embodiment, the metal member is preferably a monofilament (i.e., a single filament) or a multifilament (i.e., a stranded filament) from the viewpoint of improving the durability of the tire, and is more preferably a multifilament. The cross-sectional shape and size (for example, the diameter) of the metal member are not particularly limited, and those suitable for the desired tire may be selected, as appropriate.

When the metal member is a stranded filament formed from plural cords, the number of the plural cords is, for example, from 2 to 10, and preferably from 5 to 9.

From the viewpoint of achieving both of the internal pressure resistance and weight reduction of the tire, the thickness of the metal member is preferably from 0.2 mm to 2 mm, and more preferably from 0.8 mm to 1.6 mm. Here, a number average value of the thicknesses measured at five freely-selected positions is used as the thickness of the metal member.

The tensile modulus of elasticity (in the specification, the "elastic modulus" hereinafter means tensile modulus of elasticity, unless otherwise specified) of the metal member itself is usually approximately from 100,000 MPa to 300,000 MPa, preferably from 120,000 MPa to 270,000 MPa, and more preferably from 150,000 MPa to 250,000 MPa. The tensile modulus of elasticity of the metal member is calculated from the gradient of a stress-strain curve measured using a tensile tester with Zwick-type chucks.

The elongation at break (i.e., tensile elongation at break) of the metal member itself is usually approximately from 0.1% to 15%, preferably from 1% to 15%, and more preferably from 1% to 10%. The tensile elongation at break of the metal member can be obtained from a strain in a stress-strain curve obtained using a tensile tester with Zwick-type chucks.

[Adhesion Layer]

The adhesion layer is disposed between the metal member and the covering resin layer, and includes a polyester-based thermoplastic elastomer having a polar functional group, and at least one additive A selected from the group consisting of an amorphous resin including an ester bond, a polyester-based thermoplastic resin, and a filler.

(Polyester-Based Thermoplastic Elastomer Having Polar Functional Group)

Examples of the polar functional group include: an epoxy group (the group shown in (1) below, wherein $R^{11}$, $R^{12}$ and $R^{13}$ each independently represent a hydrogen atom or an organic group (for example, an alkyl group)); a carboxy group (-COOH) and an anhydride group thereof; an amino group ($-NH_2$); an isocyanate group (-NCO); a hydroxy group (-OH); an imino group (=NH); and a silanol group (-SiOH).

The anhydride group described above refers to an anhydrous group formed by removal of $H_2O$ from two carboxy groups (the anhydrous group shown in (2-1) below, wherein $R^{21}$ represents a single bond or an alkylene group that optionally has a substituent, and $R^{22}$ and $R^{23}$ each independently represent a hydrogen atom or an organic group (for example, an alkyl group)). The anhydride group shown in (2-1) below changes into the state shown in (2-2) below, which is the state having two carboxy groups, by being provided with $H_2O$.

Among the above groups, an epoxy group, a carboxy group, an anhydride group of a carboxy group, a hydroxy group, and an amino group are preferable, and an epoxy group, a carboxy group, an anhydride group of a carboxy group, and an amino group are more preferable, from the viewpoint of quality of adhesion to the metal member.

(1)

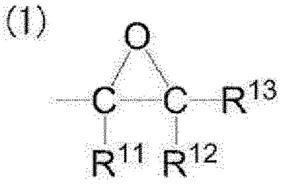

(2-1)

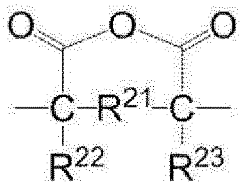

(2-2)

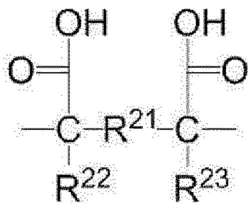

The polyester-based thermoplastic elastomer having a polar functional group can be obtained by modifying a polyester-based thermoplastic elastomer (TPC) by a compound having a group that will serve as the polar functional group (i.e., a derivative). For example, the polyester-based thermoplastic elastomer having a polar functional group can be obtained by chemically bonding (by, for example, an addition reaction or a graft reaction) a compound having a group that will serve as the polar functional group and a reactive group (for example, an unsaturated group such as an ethylenic carbon-carbon double bond) that is separate therefrom, to a polyester-based thermoplastic elastomer.

Examples of the derivative used for modifying the polyester-based thermoplastic elastomer (i.e., the compound having a group that will serve as the polar functional group) include epoxy compounds having a reactive group, unsaturated carboxylic acids (for example, methacrylic acid, maleic acid, fumaric acid, and itaconic acid), unsaturated carboxylic anhydrides (for example, maleic anhydride, citraconic anhydride, itaconic anhydride and glutaconic anhydride), other carboxylic acids having a reactive group and anhydrides thereof, amine compounds having a reactive group, isocyanate compounds having a reactive group, alcohols having a reactive group, silane compounds having a reactive group, and derivatives of these compounds.

(Synthesis Method)

A method for synthesizing the polyester-based thermoplastic elastomer having a polar functional group (hereinafter also simply referred to as "polar group-containing TPC") is specifically described below. In the following description, a method including modifying a polyester-based thermoplastic elastomer (TPC) by an unsaturated carboxylic acid or an anhydride thereof is described as one example of the synthesis method.

The polar group-containing TPC (the polyester-based thermoplastic elastomer having a polar functional group) can be obtained by, for example, modifying a melted material of a saturated polyester-based thermoplastic elastomer that contains a polyalkylene ether glycol segment by an unsaturated carboxylic acid or a derivative thereof.

Here, the modifying refers to, for example, graft modification, terminal modification, modification via an ester exchange reaction, or modification via a decomposition reaction of a saturated polyester-based thermoplastic elastomer that includes a polyalkylene ether glycol segment by an unsaturated carboxylic acid or a derivative thereof. Specifically, examples of the portion to which the unsaturated carboxylic acid or derivative thereof is bound to include a terminal functional group and an alkyl chain portion, and particularly include a terminal carboxylic acid, a terminal hydroxy group, and a carbon positioned at an $\alpha$-position or $\beta$-position relative to an ether bond in the polyalkylene ether glycol segment. It is presumable that a large proportion of molecules of the unsaturated carboxylic acid or derivative thereof are bound to $\alpha$-positions relative to ether bonds in the polyalkylene ether glycol segment.

(1) Ingredients to be Blended

(A) Saturated Polyester-based Thermoplastic Elastomer

The saturated polyester-based thermoplastic elastomer is usually a block copolymer including a soft segment that contains a polyalkylene ether glycol segment and a hard segment that contains a polyester.

The content of the polyalkylene ether glycol segment in the saturated polyester-based thermoplastic elastomer is preferably from 58% to 73% by mass, and more preferably from 60% to 70% by mass, with respect to the saturated polyester-based thermoplastic elastomer.

Examples of the polyalkylene ether glycol for forming the soft segment include polyethylene glycol, poly(propylene ether) glycol (in which the "propylene ether" includes at least one of 1,2-propylene ether or 1,3-propylene ether), poly(tetramethylene ether) glycol, and poly(hexamethylene ether) glycol. A particularly preferable example is poly(tetramethylene ether) glycol.

In the present embodiment, the polyalkylene ether glycol preferably has a number average molecular weight of from 400 to 6,000, more preferably from 600 to 4,000, and particularly preferably from 1,000 to 3,000. Here, the "number average molecular weight" is a value as measured using gel permeation chromatography (GPC). Calibration of the GPC may be performed using a polytetrahydrofuran calibration kit manufactured by Polymer Laboratories Ltd. (UK).

The saturated polyester-based thermoplastic elastomer can be obtained, for example, by polycondensation of an oligomer, which is in turn obtained by an esterification reaction or an ester exchange reaction using, as a raw material, (i) at least one selected from an aliphatic diol having 2 to 12 carbon atoms or an alicyclic diol having 2 to 12 carbon atoms, (ii) at least one selected from the group consisting of an aromatic dicarboxylic acid, an alicyclic dicarboxylic acid, and alkyl esters thereof, and (iii) a polyalkylene ether glycol having a number average molecular weight of from 400 to 6,000.

As the aliphatic diol having 2 to 12 carbon atoms or an alicyclic diol having 2 to 12 carbon atoms, those that are usually used as raw materials for polyesters, especially, as raw materials for polyester-based thermoplastic elastomers may be used. Examples thereof include ethylene glycol, propylene glycol, trimethylene glycol, 1,4-butane diol, 1,4-cyclohexane diol, and 1,4-cyclohexane dimethanol. Among them, 1,4-butanediol and ethylene glycol are preferable, and 1,4-butanediol is particularly preferable. These diols may be used singly, or in the form of a mixture of two or more thereof.

As the aromatic dicarboxylic acid and the alicyclic dicarboxylic acid, those that are usually used as raw materials for polyesters, particularly as raw materials for polyester-based thermoplastic elastomers, can be used. Examples thereof include terephthalic acid, isophthalic acid, phthalic acid, 2,6-naphthalene dicarboxylic acid, and cyclohexane dicarboxylic acid. Among them, terephthalic acid and 2,6-naphthalene dicarboxylic acid are preferable, and terephthalic acid is particularly preferable. These dicarboxylic acids may be used singly, or in combination of two or more thereof. In the case of using an alkyl ester of an aromatic dicarboxylic acid or an alicyclic dicarboxylic acid, dimethyl esters or diethyl esters of the foregoing dicarboxylic acids may be used. Particularly preferable examples among them are dimethyl terephthalate and 2,6-dimethyl naphthalate.

Small amounts of triols and tricarboxylic acids, which are trifunctional, as well as esters thereof may be additionally used for copolymerization, in addition to the above-described components. Aliphatic dicarboxylic acids, such as adipic acid, and dialkyl esters thereof can also be used as copolymerization components.

Commercially available products of such polyester-based thermoplastic elastomers include PRIMALLOY manufactured by Mitsubishi Chemical Corporation, PELPRENE manufactured by Toyo Boseki Kabushiki Kaisha, and HYTREL manufactured by DU PONT-TORAY CO., LTD.

(B) Unsaturated Carboxylic Acid or Derivative Thereof

Examples of the unsaturated carboxylic acid or derivative thereof include: unsaturated carboxylic acids such as acrylic acid, maleic acid, fumaric acid, tetrahydrophthalic acid, itaconic acid, citraconic acid, crotonic acid, and isocrotonic acid; unsaturated carboxylic acid anhydrides such as (2-octene-1-yl)succinic anhydride, (2-dodecene-1-yl)succinic anhydride, (2-octadecene-1-yl)succinic anhydride, maleic anhydride, 2-3-dimethylmaleic anhydride, bromomaleic anhydride, dichloromaleic anhydride, citraconic anhydride, itaconic anhydride, 1-butene-3,4-dicarboxylic acid anhydride, 1-cyclopentene-1,2-dicaroxylic acid anhydride, 1,2,3,6-tetrahydrophthalic anhydride, 3,4,5,6-tetrahydrophthalic anhydride, exo-3,6-epoxy-1,2,3,6-tetrahydrophthalic anhydride, 5-norbornene-2,3-dicarboxylic acid anhydride, methyl-5-norbornene-2,3-dicaroxylic acid anhydride, endo-bicyclo[2.2.2]oct-5-ene-2,3-dicarboxylic acid anhydride, and bicyclo[2.2.2]oct-7-ene-2,3,5,6-tetracarboxylic acid anhydride; and unsaturated carboxylic acid esters such as methyl (meth)acrylate, ethyl (meth)acrylate, propyl (meth)acrylate, butyl (meth)acrylate, hexyl (meth)acrylate, octyl (meth)acrylate, 2-ethylhexyl (meth)acrylate, lauryl (meth)acrylate, stearyl (meth)acrylate, glycidyl methacrylate, dimethyl maleate, 2-ethylhexyl maleate, and 2-hydroxyethyl methacrylate. Among them, unsaturated carboxylic acid anhydrides are preferable. Selection from compounds having an unsaturated bond, such as those described above, may be carried out, as appropriate, in accordance with the copolymer to be modified that includes a polyalkylene ether glycol segment and modification conditions. These compounds having an unsaturated bond may be used singly, or in combination of two or more thereof. Compounds having an unsaturated bond may be added in the state of being dissolved in an organic solvent or the like.

(C) Radical Generator

Examples of a radical generator used for carrying out a radical reaction in the modification treatment include: organic peroxides and inorganic peroxides such as t-butyl hydroperoxide, cumene hydroperoxide, 2,5-dimethylhexane-2,5-dihydroperoxide, 2,5-dimethyl-2,5-bis(tert-butyloxy)hexane, 3,5,5-trimethylhexanoyl peroxide, t-butyl peroxybenzoate, benzoyl peroxide, dicumyl peroxide, 1,3-bis(t-butyl peroxy isopropyl)benzene, dibutyl peroxide, methyl ethyl ketone peroxide, potassium peroxide, and hydrogen peroxide; azo compounds such as 2,2'-azobisisobutyronitrile, 2,2'-azobis(isobutylamido)dihalide, 2,2'-azobis[2-methyl-N-(2-hydroxyethyl)propionamide], and azo di-t-butane; and carbon radical generators such as dicumyl. Selection may be appropriately made from these radical generators, in accordance with, for example, the kind of the saturated polyester-based thermoplastic elastomer that includes a polyalkylene ether glycol segment and that is used in the modification treatment, the kind of the unsaturated carboxylic acid or derivative

thereof, and the modification conditions. These radical generator may be used singly, or in combination of two or more thereof. The radical generator may be added in the state of being dissolved in an organic solvent or the like. In order to further improve the adhesion property, a compound including an unsaturated bond (i.e., the following component (D)) may be used as a modification aid, together with the radical generator.

(D) Compound Having Unsaturated Bond

The compound having an unsaturated bond refers to a compound including a carbon-carbon multiple bond other than the (B) unsaturated carboxylic acid or derivative thereof. Specific examples of the compound having an unsaturated bond include vinylaromatic monomers such as styrene, methyl styrene, ethyl styrene, isopropylstyrene, phenylstyrene, o-methylstyrene, 2,4-dimethylstyrene, o-chlorostyrene, and o-chloromethylstyrene. Addition of these compounds is expected to improve the modification efficiency.

Additional Substances for Blending (Optional Components)

In addition to the polar group-containing TPC, freely selected substances may be included in the adhesive for forming the adhesion layer. Specifically, various additives such as resin components, rubber components, plasticizers such as paraffin oil, antioxidants, thermal stability imparting agents, photostability imparting agents, ultraviolet absorbers, neutralizers, sliding agents, antifog agents, anti-blocking agents, slipping agents, crosslinking agents, crosslinking aids, coloring agents, flame retardants, dispersants, antistatic agents, antimicrobial agents, and fluorescent brighteners may be added. Among them, it is preferable to add at least one selected from various antioxidants such as phenolic antioxidants, phosphite antioxidants, thioether antioxidants, and aromatic amine antioxidants.

The adhesion layer preferably includes the polyester-based thermoplastic elastomer having a polar functional group (the polar group-containing TPC) in an amount of 50% by mass or more, more preferably 60% by mass or more, and still more preferably 75% by mass or more, with respect to the entire adhesion layer.

(3) Blending Ratio

The blending ratio between components for forming the polar group-containing TPC is a ratio such that the amount of the (B) unsaturated carboxylic acid or derivative thereof is preferably from 0.01 to 30 parts by mass, more preferably from 0.05 to 5 parts by mass, still more preferably from 0.1 to 2 parts by mass, and particularly preferably from 0.1 to 1 part by mass, with respect to 100 parts by mass of the (A) saturated polyester-based thermoplastic elastomer. The blending ratio is preferably a ratio such that the amount of the (C) radical generator is preferably from 0.001 to 3 parts by mass, more preferably from 0.005 to 0.5 parts by mass, still more preferably from 0.01 to 0.2 parts by mass, and particularly preferably from 0.01 to 0.1 parts by mass, with respect to 100 parts by mass of the (A) saturated polyester-based thermoplastic elastomer.

The modification amount of the polar group-containing TPC as measured by an infrared absorption spectrum method is desirably from 0.01 to 15, preferably from 0.03 to 2.5, more preferably from 0.1 to 2.0, and particularly preferably from 0.2 to 1.8, in terms of the value of $A_{1786}/(Ast \times r)$ represented by the following formula. Here, $A_{1786}$ is a peak intensity at 1786 $cm^{-1}$ obtained by measurement of a 20 $\mu$m-thick film of the polar group-containing TPC. Ast is a peak intensity at a standard wave number obtained by measurement of a 20 $\mu$m-thick film of a standard material (that is a saturated polyester-based elastomer having a content of the polyalkylene ether glycol segment of 65% by mass), and r is a value obtained by dividing the molar fraction of the polyester segment in the polar group-containing TPC by the molar fraction of the polyester segment in the standard sample.

The method used for obtaining the modification amount of the polar group-containing TPC as measured by an infrared absorption spectrum method is as follows. Specifically, a sample in the form of a film having a thickness of 20 $\mu$m is dried at 100 °C for 15 hours under reduced pressure to remove unreacted materials, and subjected to measurement of an infrared absorption spectrum. From the spectrum obtained, the peak height of an absorption peak due to stretching oscillation of a carbonyl group from an acid anhydride, which appear at 1786 $cm^{-1}$, is calculated and taken as the peak intensity $A_{1786}$ (here, the tangent line connecting skirts at both sides of the absorption band ranging from 1750 to 1820 $cm^{-1}$ is considered as the base line). A20 $\mu$m-thick film of the standard sample (that is a saturated polyester-based elastomer having a content of the polyalkylene ether glycol segment of 65% by mass) is similarly subjected to measurement of an infrared absorption spectrum. From the spectrum obtained, the peak height of a peak at a standard wave number, which is, for example, the absorption peak due to out-of-plane C-H bending of a benzene ring appearing at 872 $cm^{-1}$ in the case of an aromatic polyester-based elastomer including a benzene ring, is calculated and taken as the peak intensity Ast (here, the tangent line connecting skirts at both sides of the absorption band ranging from 850 to 900 $cm^{-1}$ is considered as the base line). The peak at the standard wave number is selected from such that the peak is a peak from a hard segment and not affected by the modification, and such that no overlapping absorption peaks are present

in the vicinity of the peak. The modification amount as measured by an infrared absorption method is calculated from both peak intensities according to the foregoing formula. In the calculation, a value obtained by dividing the molar fraction of the polyester segment in the polar group-containing TPC, for which the modification amount is to be obtained, by the molar fraction of the polyester segment in the standard sample is used as r. The molar fraction mr of the polyester segment in each sample is obtained from the mass fractions ($w_1$ and $w_2$) of the polyester segment and the polyalkylene ether glycol segment and the molecular weights ($e_1$ and $e_2$) of monomer units for forming the respective segments according to the following equation:

$$mr = (w_1/e_1) / [(w_1/e_1) + (w_2/e_2)]$$

Blending Method

Synthesis of polar group-containing TPC is carried out, for example, by modifying the (A) saturated polyester-based thermoplastic elastomer by the (B) unsaturated carboxylic acid or a derivative thereof in the presence of the (C) radical generator. In the synthesis, causing the component (A) to have a melted state enables the component (A) to more effectively react with the component (B), whereby sufficient modification is achieved. Thus, causing the component (A) to have a melted state is preferable. For example, a method can preferably be used which includes preliminarily mixing the component (B) with the component (A) in a non-melted state, and melting the component (A) to allow the component (A) to react with the component (B).

For mixing the component (B) with the component (A), it is preferable to select a melt kneading method in which a kneader capable of applying a sufficient shear force is used. The kneader to be used in the melt kneading method may be freely selected from ordinary kneaders including mixing rolls, kneaders having sigma-type rotation blades, Banbury mixers, high-speed two-axis continuous mixers, and one-axis, two-axis or multi-axis extruder-type kneaders. Among them, two-axis extruders are preferable from the viewpoint that the two axis extruders provide a high reaction efficiency and a low production cost. Melt kneading may be carried out after the component (A) in the powdery or granular state, the component (B), and the component (C), and, if necessary, the component (D) and other components exemplified as the additional ingredients (optional components) are uniformly mixed at a prescribed blending ratio using, for example, a Henschel mixer, a ribbon blender, or a V-type blender. The temperature at which the kneading of the components is performed is preferably in the range of from 100 °C to 300 °C, more preferably from 120 °C to 280 °C, and particularly preferably from 150 °C to 250 °C, in consideration of thermal deterioration or decomposition of the component (A) and the half-life temperature of the component (C). An optimum kneading temperature from the practical viewpoint is within the temperature range of from a temperature that is 20 °C higher than the melting point of the component (A) to the melting point. The order and method for kneading respective components are not particularly limited, and a method in which the component (A), the component (B), the component (C), and additional ingredients such as the component (D) are kneaded at once may also be used. Another method may be used which includes kneading some of the components (A) to (D), and thereafter kneading the remaining components including the additional ingredients. It should be noted that, in the case of addition of the component (C), the component (C) is preferably added at the same time with the addition of the components (B) and (D) from the viewpoint of improving the adhesion property.

[Additive A in Adhesion Layer]

The adhesion layer further includes the additive A. Examples of the additive include at least one selected from the group consisting of an amorphous resin including an ester bond, a polyester-based thermoplastic resin, and a filler.

(Amorphous Resin Including Ester Bond)

The adhesion layer may include an amorphous resin including an ester bond (hereinafter also simply referred to as "specific amorphous resin") as an additive A. Inclusion of the specific amorphous resin imparts a higher adhesion durability than that of a resin-metal composite member including an adhesion layer consisting of the polyester-based thermoplastic elastomer having a polar functional group.

It is conceivable that the specific amorphous resin contained as the additive forms a discontinuous phase (island regions in a sea-island structure) in a continuous phase (i.e., the sea region in the sea-island structure) of the polyester-based thermoplastic elastomer having a polar functional group, and that the specific amorphous resin is present in the state of having a granular shape in the adhesion layer, similar to the existence state of the filler. It is presumable that the specific amorphous resin present in the granular state increases the elasticity of the adhesion layer and increases the rigidity of the adhesion layer, thereby increasing the strength of the adhesion layer.

Since the specific amorphous resin (i.e., the amorphous resin including an ester bond) includes an ester bond,

the specific amorphous resin has an excellent compatibility with the polyester-based thermoplastic elastomer having a polar functional group that forms the continuous phase. Therefore, the specific amorphous resin has an excellent dispersibility in the continuous phase, whereby aggregation of the specific amorphous resin is reduced and the specific amorphous resin is present in fine particle state. It is conceivable that the effect in terms of increasing the strength is more favorably exhibited as a result of the above mechanism.

It is presumable that the increase in the strength of the adhesion layer itself reduces occurrence of breakage of the adhesion layer, occurrence of sliding at an interphase of the adhesion layer, and the like in the case of application of a stress to the adhesion layer, as a result of which a high durability of adhesion between the metal member and the adhesion layer is obtained.

Due to the increased rigidity of the adhesion layer achieved by inclusion of the specific amorphous resin, the resin-metal composite member including the adhesion layer including the specific amorphous resin produces an excellent effect in terms of increasing the cornering power of a tire, as compared to a resin-metal composite member including an adhesion layer consisting of the polyester-based thermoplastic elastomer having a polar functional group. Further, an effect in terms of improving plunger resistance is also expected to be exerted due to the inclusion of the polyester-based thermoplastic resin.

From the viewpoint of adhesion property, the content ratio of the specific amorphous resin in the adhesion layer is preferably 50% by mass or less, more preferably 45% by mass or less, and still more preferably 40% by mass or less, with respect to the entire adhesion layer.

The lower limit of the content ratio of the specific amorphous resin in the adhesion layer is not particularly limited, but is preferably 10% by mass or more, more preferably 15% by mass or more, and still more preferably 20% by mass or more, from the viewpoint of sufficiently obtaining the effect in terms of increasing the rigidity.

The content ratio of the specific amorphous resin is preferably from 10% by mass to 50% by mass, more preferably from 15% by mass to 45% by mass, and still more preferably from 20% by mass to 40% by mass, with respect to the entire adhesion layer.

The content ratio of the specific amorphous resin in the adhesion layer can be determined using a nuclear magnetic resonance (NMR) method. A method used for determining whether or not the adhesion layer includes the specific amorphous resin is not particularly limited, and the determination may be carried out using a method such as extraction with solvent, thermal analysis, or observation of a cross-section.

The term "amorphous resin" as used herein means a thermoplastic resin that has an extremely low crystallinity or that cannot have a crystalline state. Only one specific amorphous resin may be contained in the adhesion layer, or two or more specific amorphous resins may be contained in the adhesion layer.

From the viewpoint of increasing the rigidity of the adhesion layer, the glass transition temperature (Tg) of the specific amorphous resin is preferably 40 °C or higher, more preferably 60 °C or higher, and still more preferably 80 °C or higher. The upper limit of the glass transition temperature (Tg) of the specific amorphous resin is not particularly limited, but is preferably 200 °C or lower, more preferably 170 °C or lower, and still more preferably 150 °C or lower.

The glass transition temperature (Tg) of the specific amorphous resin is preferably from 40 °C to 200 °C, more preferably from 60 °C to 170 °C, and still more preferably from 80 °C to 150 °C.

The Tg of the specific amorphous resin is a value as measured by DSC in accordance with Japanese Industrial Standards (JIS) K 6240:2011. Specifically, the temperature at the cross-point of the starting baseline and the line tangent at the inflection point in DSC measurement is taken as Tg. Measurement may be carried out at a sweeping rate of 10 °C/min using, for example, a DSC Q1000 manufactured by TA instruments.

A resin including an ester bond is used as the specific amorphous resin from the viewpoint of the affinity with the polyester-based thermoplastic elastomer having a polar functional group. Examples of the amorphous resin including an ester bond include amorphous polyester-based thermoplastic resins, amorphous polycarbonate-based thermoplastic resins, and amorphous polyurethane-based thermoplastic resins. Among them, amorphous polyester-based thermoplastic resins and amorphous polycarbonate-based thermoplastic resins are preferable.

Examples of commercially available products of the specific amorphous resin include VYLON series products, which are amorphous polyester resins manufactured by Toyobo Corporation, NOVAREX series products, which are amorphous polycarbonate resins manufactured by Mitsubishi Engineering Plastics Corporation, and ALTESTER series products, which are amorphous polyester resins manufactured by Mitsubishi Gas Chemical Company, Inc.

(Polyester-based Thermoplastic Resin)

The adhesion layer may include a polyester-based thermoplastic resin as an additive A. Inclusion of a polyester-based thermoplastic resin in the adhesion layer provides a higher adhesion durability as compared to a resin-metal composite member including an adhesion layer consisting of a polyester-based thermoplastic elastomer having a polar functional group.

It is conceivable that the polyester-based thermoplastic resin contained as an additive forms a discontinuous

phase (island regions in a sea-island structure) in a continuous phase (i.e., the sea region in the sea-island structure) of the polyester-based thermoplastic elastomer having a polar functional group, and that the polyester-based thermoplastic resin is present in the state of having a granular shape in the adhesion layer, similar to the existence state of the filler. It is presumable that the polyester-based thermoplastic resin present in the granular state increases the elasticity of the adhesion layer and increases the rigidity of the adhesion layer, thereby increasing the strength of the adhesion layer.

Since the polyester-based thermoplastic resin includes an ester bond, the polyester-based thermoplastic resin has an excellent compatibility with the polyester-based thermoplastic elastomer having a polar functional group that forms the continuous phase. Therefore, the polyester-based thermoplastic resin has an excellent dispersibility in the continuous phase, whereby aggregation of the polyester-based thermoplastic resin is reduced and the polyester-based thermoplastic resin is present in fine particle state. It is conceivable that the effect in terms of increasing the strength is more favorably exhibited as a result of the above mechanism.

Inclusion of a polyester-based thermoplastic resin in the adhesion layer means inclusion of a thermoplastic resin formed of the same type of structural unit as that of the hard segments in the polyester-based thermoplastic elastomer having a polar functional group contained in the adhesion layer. In other words, the inclusion of a polyester-based thermoplastic resin in the adhesion layer leads to an increase in the proportion of hard segments (hereinafter also referred to as "HS proportion") in the adhesion layer. It is presumable that an increased proportion of hard segments in the adhesion layer results in an increased rigidity of the adhesion layer, and increases the strength also from this aspect.

It is presumable that the increased strength of the adhesion layer itself reduces occurrence of breakage of the adhesion layer and occurrence of sliding at an interface of the adhesion layer in the case of application of a stress to the adhesion layer, as a result of which a high durability of adhesion between the metal member and the adhesion can be obtained.

The expression "same type of structural unit as that of the hard segments in the polyester-based thermoplastic elastomer having a polar functional group" as used herein means a structural unit of which the manner of bonding is the same as the manner of bonding configuring the main chain of the structural unit corresponding to the hard segments. Only one polyester-based thermoplastic resin may be contained in the adhesion layer, or two or more polyester-based thermoplastic resins may be contained in the adhesion layer.

The increased HS proportion in the adhesion layer caused by inclusion of the polyester-based thermoplastic resin leads to an increased rigidity of the adhesion layer, thereby providing an excellent effect in terms of improving the cornering power of a tire including the resin-metal composite member including the adhesion layer, as compared to a resin-metal composite member including an adhesion layer consisting of the polyester-based thermoplastic elastomer having a polar functional group. Further, it is also expected that the inclusion of the polyester-based thermoplastic resin enhances the moisture barrier property for the metal member to be covered with the adhesion layer, thereby producing an effect in terms of improving moist-heat resistance and an effect in terms of improving plunger resistance.

From the viewpoint of improving adhesion resistance, the HS proportion in the adhesion layer is preferably from 60 % by mol to less than 98% by mol, and more preferably from 65 % by mol to 90% by mol.

In the present specification, the HS proportion in the adhesion layer is the proportion of HS relative to the sum of hard segments (HS) and soft segments (SS) in the adhesion layer, and is calculated according to the following equation. Here, the "hard segments (HS) in the adhesion layer" means the sum of hard segments in the polyester-based thermoplastic elastomer having a polar functional group contained in the adhesion layer and the structural unit in the polyester-based thermoplastic resin contained in the adhesion layer that is of the same type as that of the hard segments.

$$\text{HS proportion (mol\%)} = \{HS/(HS+SS)\}\times 100$$

The HS proportion (mol%) of the adhesion layer may be measured, for example, by a nuclear magnetic resonance (NMR) method in the following manner. The HS ratio may be measured, for example, by $^1$H-NMR measurement at room temperature using an AL400 manufactured by JEOL Ltd. as an NMR analyzer, HFIP-$d_2$ (1,1,1,3,3,3-hexafluoroisopropanol-$d_2$) as a solvent, and a measurement sample prepared by 20 mg / 2 g dilution dissolution of the resin.

From the viewpoint of adhesion property, the content ratio of the polyester-based thermoplastic resin in the adhesion layer is preferably 50% by mass or less, more preferably 40% by mass or less, and still more preferably 30% by mass or less, with respect to the entire adhesion layer.

The lower limit value of the content ratio of the polyester-based thermoplastic resin in the adhesion layer is not particularly limited, but is preferably 5% by mass or more, more preferably 10% by mass or more, and still more preferably 15% by mass or more, from the viewpoint of sufficiently obtaining an effect in terms of increasing the rigidity.

The content ratio of the polyester-based thermoplastic resin is preferably from 5% by mass to 50% by mass, more preferably 10% by mass to 40% by mass, and still more preferably from 15% by mass to 30% by mass, with respect to the entire adhesion layer.

The content ratio of the polyester-based thermoplastic resin in the adhesion layer can be determined using a

nuclear magnetic resonance (NMR) method. A method used for determining whether or not the adhesion layer includes the polyester-based thermoplastic resin is not particularly limited, and the determination may be carried out using a method such as thermal analysis, or observation of a cross-section.

From the viewpoint of ensuring a favorable adhesion property, higher similarity between the structure of the hard segments in the polyester-based thermoplastic elastomer having a polar functional group and the structure of the polyester-based thermoplastic resin is more preferred.

When the hard segments included in the polyester-based thermoplastic elastomer having a polar functional group are formed from polybutylene terephthalate, the polyester-based thermoplastic resin to be used is preferably polybutylene terephthalate, polyethylene terephthalate, polybutylene naphthalate, or polyethylene naphthalate, and is more preferably polybutylene terephthalate.

In the present specification, the condition that the polyester-based thermoplastic resin is formed of the same type of structural unit as that of the hard segments in the polyester-based thermoplastic elastomer having a polar functional group is satisfied in a case in which the polyester-based thermoplastic resin is composed only of the same type of structural unit as that of the hard segments in the polyester-based thermoplastic elastomer, as well as in a case in which at least 80% by mol (preferably at least 90% by mol, more preferably at least 95% by mol) of all structural units configuring the polyester-based thermoplastic resin is the same type of structural unit as that of the hard segments of the polyester-based thermoplastic elastomer having a polar functional group. When there are two or more types of structural units each corresponding to a hard segment in the polyester-based thermoplastic elastomer having a polar functional group, it is preferable that the polyester-based thermoplastic resin be formed of the same type of structural unit as the structural unit having the largest molar fraction among the two or more types of structural units.

The polyester-based thermoplastic resin is, for example, a polyester for forming the hard segments of the polyester-based thermoplastic elastomer used in the after-mentioned tire frame. Specific examples thereof include: aliphatic polyesters such as polylactic acid, poly(hydroxy-3-butylbytyric acid), poly(hydroxy-3-hexylbutyric acid), poly(ε-caprolactone), polyenantholactone, polycaprylolactone, polybutylene adipate, and polyethylene adipate; and aromatic polyesters such as polyethylene terephthalate (PET), polybutylene terephthalate (PBT), polyethylene naphthalate (PEN), and polybutylene naphthalate (PBN). Among them, the polyester-based thermoplastic resin is preferably an aromatic polyester, more preferably polybutylene terephthalate, polyethylene terephthalate, polybutylene naphthalate, or polyethylene naphthalate, and still more preferably polybutylene terephthalate, from the viewpoint of improving the adhesion durability and the viewpoint of heat resistance and processability.

Commercially available products of the polyester-based thermoplastic resin that can be used include DURANEX series products (for example, 201AC, 2000, and 2002) manufactured by Polyplastics Co., Ltd., NOVADURAN series products (for example, 5010R5 and 5010R3-2) manufactured by Mitsubishi Engineering-Plastics Corporation, and TORAYCON series products (for example, 1401X06 and 1401X31) manufactured by Toray Industries, Ltd.

(Filler)

The adhesion layer may include a filler as an additive. Inclusion of a filler enables obtainment of a higher adhesion durability as compared to a resin-metal composite member including an adhesion layer consisting of the polyester-based thermoplastic elastomer having a polar functional group.

Inclusion of a filler as an additive A increases the elasticity of the adhesion layer, and thus increases the rigidity of the adhesion layer. It is presumable that this leads to an increased strength of the adhesion layer itself, and reduces, for example, occurrence of breakage of the adhesion layer and occurrence of sliding at an interface of the adhesion layer in the case of application of a stress to the adhesion layer, as a result of which a high durability of adhesion between the metal member and the adhesion can be obtained.

Due to the increased rigidity of the adhesion layer achieved by inclusion of the filler, the resin-metal composite member including the adhesion layer produces an excellent effect in terms of increasing the cornering power of a tire, as compared to a resin-metal composite member including an adhesion layer consisting of the polyester-based thermoplastic elastomer having a polar functional group. Further, an effect in terms of improving plunger resistance is also expected to be exerted due to the inclusion of the filler.

From the viewpoint of obtaining an excellent adhesion property, the content ratio of the filler in the adhesion layer is preferably from more than 0% by mass to 20% by mass with respect to the entire adhesion layer. From the viewpoints of improving the adhesion durability, improving the cornering power, and improving the plunger resistance, the lower limit value of the content ratio of the filler in the adhesion layer is more preferably 3% by mass or more, and more preferably 5% by mass or more. The upper limit value thereof is preferably 15% by mass or less, and more preferably 10% by mass or less, from the viewpoint of adhesion property.

The content ratio of the filler is preferably from 3% by mass to 15% by mass, more preferably from 3% by mass to 10% by mass, and still more preferably from 5% by mass to 10% by mass, with respect to the entire adhesion layer.

As the filler, an inorganic filler, for example, is suitably used. The shape of the filler is, for example, a particle

shape, a plate shape (i.e., a flattened shape), or a fiber shape.

A particle shape refers to a shape in which the ratio between any two of x, y, or z is in the range of 1/2 to 2 when three-dimensional measurements are carried out to obtain the length (x) in a X direction, the length (y) in the Y direction, and the length (z) in the Z direction.

A plate shape refers to a shape in which one of x, y, or z is less than 1/2 of each of the other two of x, y, or z when three-dimensional measurements are carried out to obtain the length (x) in a X direction, the length (y) in the Y direction, and the length (z) in the Z direction, and in which the ratio between the other two of x, y, or z is within the range of 1/2 to 2.

A fiber shape refers to a shape in which two of x, y, or z are each less than 1/2 of the other one of x, y, or z when three-dimensional measurements are carried out to obtain the length (x) in a X direction, the length (y) in the Y direction, and the length (z) in the Z direction, and in which the ratio between the two of x, y, or z is within the range of 1/2 to 2.

When a fiber-shaped filler is contained, it is more easier to increase the elasticity of the adhesion layer compared to a case in which only a filler having another shape (for example, a particle shape or a plate shape) is contained. Therefore, a fiber-shaped filler can enhance the durability by addition in a smaller amount, thereby improving the adhesion durability, the plunger property, and the cornering force. When at least one of a particle-shaped filler or a plate-shaped filler is contained, an increase in the variation (anisotropy) in rigidity and durability with the direction of external force application is hindered as compared to a case in which only a filler having another shape (for example, a fiber shape) is contained, and the adhesion durability, the plunger property, and the cornering force can be improved.

By together using a fiber-shaped filler and at least one of a particle-shaped filler or a plate-shaped filler, the durability can be enhanced by addition in a smaller amount thereof while hindering an increase in the variation (anisotropy) in rigidity and durability with the direction of external force application, as a result of which the adhesion durability, the plunger property, and the cornering force can be improved.

Examples of the particle-shaped filler include glass (for example, a glass bead), calcium carbonate, silica, magnesium carbonate, magnesium oxide, alumina, barium sulfate, carbon black, graphite, ferrite, aluminum hydroxide, magnesium hydroxide, antimony oxide, titanium oxide, and zinc oxide.

Examples of the plate-shaped filler include talc, kaolin, mica, and montmorillonite.

Examples of the fiber-shaped filler include glass (for example, glass fiber), carbon fibers, metal fibers, wollastonite, calcium titanate, xonotlite, and basic magnesium sulfate.

Among the foregoing examples, glass particles (for example, glass beads), glass filaments (for example, glass fibers), or talc is preferable from the viewpoint of improving the adhesion durability.

The particle-shaped filler has an average particle size of preferably from 0.1 μm to 50 μm, more preferably from 0.5 μm to 30 μm, and still more preferably from 1 μm to 20 μm.

The plate-shaped filler has an average particle size of preferably from 0.1 μm to 50 μm, more preferably from 0.5 μm to 20 μm, and still more preferably from 1 μm to 20 μm.

The fiber-shaped filler has a length in the long axis direction of preferably from 50 μm to 1000 μm, more preferably from 100 μm to 800 μm, and still more preferably from 200 μm to 700 μm.

The average particle size of the particle-shaped or plate-shaped filler, and the length in the long axis direction of the fiber-shaped filler are measured according to the following method.

In the case of measurement of the average particle size, particles are charged in a particle size distribution measuring instrument (MASTERSIZER 2000 manufactured by Malvern Instruments Ltd.), and the particle size distribution thereof is measured. Using a software attached to the instrument, a value is determined such that 50% by number of the particles have greater particle sizes than the value, and such that 50% by number of the particles have smaller particle sizes than the value, and this value is taken as the average particle size.

In the case of measurement of the length in the long axis, any resin component in the adhesion layer in which the fiber-shaped filler is included is removed by baking in an electric furnace, the residual filler is observed under a microscope, and the length in the long axis direction is measured by image analysis. A value is calculated such that 50% by number of the filler particles have greater lengths than the value, and such that 50% by number of the filler particles have smaller lengths than the value, and the value is taken as the average length in the long axis direction.

(Properties)

• Tensile Modulus of Elasticity

The adhesion layer preferably has a tensile modulus of elasticity that is smaller than that of the covering resin layer. The tensile modulus of elasticity of the adhesion layer can be adjusted by, for example, the kind of the adhesive to be used for forming the adhesion layer, the conditions for forming the adhesion layer, and heat history (for example, heating temperature and heating time).

The lower limit value of the tensile modulus of elasticity of the adhesion layer is preferably 1 MPa or higher,

more preferably 20 MPa or higher, and still more preferably 50 MPa or higher. When the tensile modulus of elasticity is not lower than the foregoing lower limit value, excellent adhesion performance to the metal member and excellent tire durability can be obtained.

The upper limit value of the tensile modulus of elasticity of the adhesion layer is preferably 1500 MPa or lower, more preferably 600 MPa or lower, and still more preferably 400 MPa or lower, from the viewpoint of ride comfortability.

The tensile modulus of elasticity is preferably from 1 MPa to 1500 MPa, more preferably from 20 MPa to 600 MPa, and still more preferably from 50 MPa to 400 MPa.

The tensile modulus of elasticity of the adhesion layer can be carried out in the same manner as the below-described method used for measuring the tensile modulus of elasticity of the covering resin layer.

Assuming that the tensile modulus of elasticity of the adhesion layer is represented by $E_1$, and the tensile modulus of elasticity of the covering resin layer is represented by $E_2$, the value of $E_1/E_2$ is, for example, from 0.05 to 0.5, preferably from 0.05 to 0.3, and more preferably from 0.05 to 0.2. When the value of $E_1/E_2$ is in the above-describe range, excellent tire durability is obtained as compared to a case in which the value is smaller than the above-described range, and excellent ride comfortability is obtained as compared to a case in which the value is greater than the above-described range.

•Melting Point

The melting point of the polyester-based thermoplastic elastomer having a polar functional group (i.e., the polar group-containing TPC) is preferably from 160 °C to 230 °C, more preferably from 180 °C to 227 °C, and still more preferably from 190 °C to 225 °C.

Due to the melting point being 160 °C or higher, excellent heat resistance is exhibited against the heating performed during tire production (for example, heating during vulcanization). Further, when the melting point is in the above-described range, the melting point can easily be set to a temperature that is close to the melting point of a polyester-based thermoplastic elastomer, if any, contained in the covering resin layer. By setting the melting point of the polyester-based thermoplastic elastomer having a polar functional group so as to be close to the melting point of the optional polyester-based thermoplastic elastomer contained in the covering resin layer, an excellent adhesion property can be obtained.

The melting point of the polar group-containing TPC refers to a temperature at which an endothermic peak is obtained in a curve (DSC curve) obtained by differential scanning calorimetry (DSC). The measurement of the melting point is carried out in compliance with JIS K7121: 2012, using a differential scanning calorimeter (DSC). The melting point can be measured at a sweep rate of 10 °C/min using, for example, a DSC Q100 manufactured by TA Instruments.

•Thickness

The average thickness of the adhesion layer is not particularly limited, and is preferably from 5 μm to 500 μm, more preferably from 20 μm to 150 μm, and still more preferably from 20 μm to 100 μm, from the viewpoint of ride comfortability during running and tire durability.

The average thickness of the adhesion layer is determined by taking SEM images at five freely-selected positions of the cross-section of the resin-metal composite member cut along the direction in which the metal member, the adhesion layer, and the covering resin layer are layered, and taking a number average value of the thickness values of the adhesion layer measured from the obtained SEM images as the average thickness of the adhesion layer. The thickness of the adhesion layer in each SEM image is a thickness value measured at a portion at which the thickness of the adhesion layer assumes the smallest value (i.e., a portion at which the distance between the interface between the metal member and the adhesion layer and the interface between the adhesion layer and the covering resin layer assumes the smallest value).

When the average thickness of the adhesion layer is represented by $T_1$, and the average thickness of the covering resin layer is represented by $T_2$, the value of $T_1/T_2$ is, for example, from 0.1 to 0.5, more preferably from 0.1 to 0.4, and still more preferably from 0.1 to 0.35. When the value of $T_1/T_2$ is in the above-described range, ride comfortability during running is excellent as compared to a case in which the value is smaller than the above-described range, and tire durability is excellent as compared to a case in which the value is greater than the above-described range.

[Covering Resin Layer]

The material of the covering resin layer is not particularly limited, and at least one thermoplastic material selected from the group consisting of a thermoplastic resin or a thermoplastic elastomer may be used.

The covering resin layer preferably includes a thermoplastic elastomer from the viewpoint of ease of shaping and from the viewpoint of quality of adhesion to the adhesion layer.

The covering resin layer preferably includes, among thermoplastic elastomers, a polyester-based thermoplastic elastomer, in particular. Since the adhesion layer includes a polyester-based thermoplastic elastomer having a polar functional group, the inclusion of a polyester-based thermoplastic elastomer in the covering resin layer provides high compatibility between the material for the adhesion layer (mainly, an adhesive) and the material for the covering resin layer (mainly, a resin). Due to this configuration, a resin can be applied to a surface of the adhesion layer with high affinity, as a result of which a high adhesion property between the adhesion layer and the covering resin layer can be obtained.

(Polyester-based Thermoplastic Elastomer)

The polyester-based thermoplastic elastomer that may be contained is preferably a polyester-based thermoplastic elastomer that does not have a polar functional group, and more preferably an unmodified polyester-based thermoplastic elastomer.

When the covering resin layer includes a polyester-based thermoplastic elastomer (preferably a polyester-based thermoplastic elastomer that does not have a polar functional group), the content of the polyester-based thermoplastic elastomer in the covering resin layer is preferably 50% by mass or more, more preferably 60% by mass or more, and still more preferably 70% by mass or more, with respect to the entire covering resin layer.

Details of the polyester-based thermoplastic elastomer are the same as those of the polyester-based thermoplastic elastomer used in the below-described tire frame, and their preferable embodiments are also the same. In consideration of this, detailed descriptions of the polyester-based thermoplastic elastomer are omitted here.

When the covering resin layer includes a polyester-based thermoplastic elastomer, the melting point of the polyester-based thermoplastic elastomer is preferably from 160 °C to 230 °C, more preferably from 180 °C to 227 °C, and still more preferably from 190 °C to 225 °C.

When the melting point is 160 °C or higher, heat resistance to heating during tire production (for example, heating during vulcanization) is excellent. When the melting point is in the foregoing range, the melting point can more easily be set to a temperature close to the melting point of the polyester-based thermoplastic elastomer having a polar functional group contained in the adhesion layer. The closeness of the melting points enables obtainment of an excellent adhesion property.

The measurement of the melting point of the polyester-based thermoplastic elastomer contained in the covering resin layer is performed by the same method as that used in the measurement of the melting point of the polar group-containing TPC described above.

(Other Thermoplastic Elastomer)

Examples of other thermoplastic elastomers than the polyester-based thermoplastic elastomer include polyamide-based thermoplastic elastomers, polystyrene-based thermoplastic elastomers, polyurethane-based thermoplastic elastomers, and olefin-based thermoplastic elastomers. These may be used singly, or in combination of two or more thereof.

Details of the polyamide-based thermoplastic elastomers, polystyrene-based thermoplastic elastomers, polyurethane-based thermoplastic elastomers, and olefin-based thermoplastic elastomers are the same as those in the descriptions of the after-mentioned thermoplastic elastomer for use in a tire frame, and their preferable embodiments are also the same. In consideration of this, detailed descriptions thereof are omitted here.

(Thermoplastic Resin)

Examples of thermoplastic resins include polyamide-based thermoplastic resins, polyester-based thermoplastic resins, olefin-based thermoplastic resins, polyurethane-based thermoplastic resins, vinyl chloride-based thermoplastic resins, and polystyrene-based thermoplastic resins. These may be used singly, or in combination of two or more thereof.

-Polyamide-based Thermoplastic Resins-

An example of the polyamide-based thermoplastic resin is the polyamide for forming a hard segment of the after-mentioned polyamide-based thermoplastic elastomer for use in a tire frame. Examples of the polyamide-based thermoplastic resin include a polyamide (amide 6) obtained by ring-opening polycondensation of ε-caprolactam, a polyamide (amide 11) obtained by ring-opening polycondensation of undecanelactam, a polyamide (amide 12) obtained by ring-opening polycondensation of lauryllactam, a polyamide (amide 66) obtained by polycondensation of a diamine and a dibasic acid, and a polyamide (amide MX) including metaxylenediamine as a structural unit.

Amide 6 can be expressed by, for example, $\{CO-(CH_2)_5-NH\}_n$. Amide 11 can be expressed by, for example,

$\{CO-(CH_2)_{10}-NH\}_n$. Amide 12 can be expressed by, for example, $\{CO-(CH_2)_{11}-NH\}_n$. Amide 66 can be expressed by, for example, $\{CO(CH_2)_4CONH(CH_2)_6NH\}_n$. Amide MX can be represented by, for example, the following structural unit (A-1). In the formulae, n represents the number of repeating units.

Examples of commercially available products of amide 6 that can be used include UBE NYLON series products (for example, 1022B and 1011FB) manufactured by Ube Industries, Ltd. Examples of commercially available products of amide 11 that can be used include RILSAN B series products manufactured by Arkema K. K. Examples of commercially available products of amide 12 that can be used include UBE NYLON series products (for example, 3024U, 3020U, and 3014U) manufactured by Ube Industries, Ltd. Examples of commercially available products of amide 66 that can be used include UBE NYLON series products (for example, 2020B and 2015B) manufactured by Ube Industries, Ltd. Examples of commercially available products of amide MX that can be used include MX-NYLON series products (for example, S6001, S6021, and S6011) manufactured by Mitsubishi Gas Chemical Company, Inc.

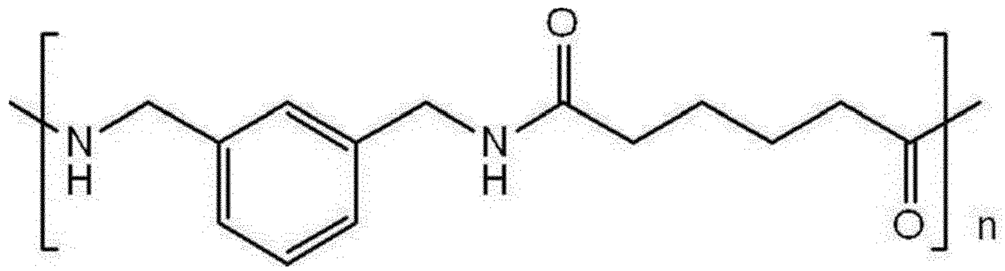

(A-1)

The polyamide-based thermoplastic resin may be a homopolymer formed only of the above-described structural unit, or a copolymer of the above-described structural unit and another monomer. In the case of the copolymer, the content ratio of the above-described structural unit in the polyamide-based thermoplastic resin is preferably 40% by mass or more.

-Polyester-based Thermoplastic Resin-

An example of the polyester-based thermoplastic resin is the polyester for forming a hard segment of the after-mentioned polyester-based thermoplastic elastomer used in a tire frame. Specific examples thereof include: aliphatic polyesters such as polylactic acid, poly(hydroxy-3-butylbytyric acid), poly(hydroxy-3-hexylbutyric acid), poly(ε-caprolactone), polyenantholactone, polycaprylolactone, polybutylene adipate, and polyethylene adipate; and aromatic polyesters such as polyethylene terephthalate, polybutylene terephthalate, polyethylene naphthalate, and polybutylene naphthalate. Among them, the polyester-based thermoplastic resin is preferably polybutylene terephthalate, from the viewpoint of heat resistance and processability.

Commercially available products of the polyester-based thermoplastic resin that can be used include DURANEX series products (for example, 2000, and 2002) manufactured by Polyplastics Co., Ltd., NOVADURAN series products (for example, 5010R5 and 5010R3-2) manufactured by Mitsubishi Engineering-Plastics Corporation, and TORAYCON series products (for example, 1401X06 and 1401X31) manufactured by Toray Industries, Ltd.

-Olefin-based Thermoplastic Resin-

An example of the olefin-based thermoplastic resin is the polyolefin for forming a hard segment of the after-mentioned olefin-based thermoplastic elastomer for use in a tire frame.

Specific examples of the olefin-based thermoplastic resin include polyethylene-based thermoplastic resins, polypropylene-based thermoplastic resins, and polybutadiene-based thermoplastic resins. Among them, the olefin-based thermoplastic resin is preferably a polypropylene-based thermoplastic resin from the viewpoint of heat resistance and processability.

Examples of polypropylene-based thermoplastic resins include propylene homopolymers, propylene-α-olefin random copolymers, and propylene-α-olefin block copolymers. Examples of α-olefins include α-olefins having about 3 to about 20 carbon atoms such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, and 1-eicosene.

The covering resin layer may include components other than thermoplastic resins and thermoplastic elastomers. Examples of the other components include rubber, various fillers (for example, silica, calcium carbonate, and clay), antiaging agents, oils, plasticizers, coloring developing agents, and weather resistance-imparting agents.

The covering resin layer may include an additive that is within the scope of the additive A (i.e., at least one

additive selected from the group consisting of an amorphous resin including an ester bond, a polyester-based thermoplastic resin, and a filler) included in the adhesion layer. The additive included in the covering resin layer is hereinafter referred to as "additive B".

The details of the additive B contained in the covering resin layer are the same as those of the additive A contained in the adhesion layer, and preferable embodiments thereof are also the same. Thus, detailed explanations thereof are omitted here.

When the adhesion layer includes the additive A, and the covering resin layer includes the additive B, the content ratio (% by mass) of the additive A in the adhesion layer is preferably higher than the content ratio (% by mass) of the additive B in the covering resin layer.

By setting the content ratio of the additive in the adhesion layer to a value higher than that in the covering resin layer, the rigidity of the adhesion layer can be made higher than that of the covering resin layer, whereby the metal layer, the adhesion layer, and the covering resin layer, which are stacked in this order, are disposed in the decreasing order of rigidity. This configuration decreases a step difference in the rigidity level, facilitates relaxing of a stress under application of a load, and achieves a still higher adhesion durability.

(Physical Properties)

• Thickness

The average thickness of the covering resin layer is not particularly limited. From the viewpoint of improved durability and melt-bonding properties, the average thickness of the covering resin layer is preferably from 10 μm to 1000 μm, and more preferably from 50 μm to 700 μm.

The average thickness of the covering resin layer is determined by taking SEM images at five freely-selected positions of the cross-section of the resin-metal composite member cut along the direction in which the metal member, the adhesion layer, and the covering resin layer are stacked, and taking a number average value of the thickness values of the covering resin layer measured from the obtained SEM images as the average thickness of the covering resin layer. The thickness of the covering resin layer in each SEM image is a thickness value measured at a portion at which the thickness of the covering resin layer assumes the smallest value (i.e., a portion at which the distance between the interface between the adhesion layer and the covering resin layer and the outer periphery of the resin-metal composite member assumes the smallest value).

• Tensile Modulus of Elasticity

The tensile modulus of elasticity of the covering resin layer is preferably larger than the tensile modulus of elasticity of the adhesion layer. The tensile modulus of elasticity of the covering resin layer is, for example, from 50 MPa to 1000 MPa, and, from the viewpoint of ride comfortability and running performance, the tensile modulus of elasticity of the covering resin layer is preferably from 50 MPa to 800 MPa, and more preferably from 50 MPa to 700 MPa.

The tensile modulus of elasticity of the covering resin layer can be regulated, for example, based on the kind of the resin contained in the covering resin layer.

The measurement of tensile modulus of elasticity is performed in accordance with JIS K7113:1995. Specifically, the measurement of tensile modulus of elasticity is performed at a pulling rate of 100 mm/min using, for example, a Shimadzu AUTOGRAPH AGS-J (5KN) manufactured by Shimadzu Corporation. The measurement of the tensile modulus of elasticity of the covering resin layer contained in the resin-metal composite member may also be performed by, for example, measuring the tensile modulus of elasticity of a separately-prepared measurement sample formed of the same material as that of the covering resin layer.

<Tire>

A tire according to the present embodiment includes an annular tire frame that includes an elastic material, and the above-described resin-metal composite member for a tire according to the present embodiment. The resin-metal composite member for a tire can be used, for example, as a reinforcing belt member that is wound around the outer circumference of a tire frame in the circumferential direction or a bead member.

The tire frame, which is a component of the tire according to the present embodiment, is described below.

[Tire Frame]

The tire frame includes an elastic material. Examples of the tire frame includes a tire frame that includes a rubber material as an elastic material (a tire frame for a rubber tire), and a tire frame that includes a resin material as

an elastic material (a tire frame for a resin tire).

(Elastic Material: Rubber Material)

The rubber material includes rubber (i.e., a rubber component), and may further include other components, such as additives, as far as advantageous effects according to the present invention are not impaired. The content of rubber (i.e., rubber component) in the tire frame is preferably from 50% by mass or more, and more preferably 90% by mass or more, with respect to the entire tire frame. The tire frame can be formed using, for example, a rubber material.

The rubber material for use in the tire frame is not particularly limited, and natural rubbers and various synthetic rubbers that have ordinarily been used in conventional rubber compositions may be used singly or in combination of two or more thereof. For example, one of the following rubbers, or a rubber blend containing two or more of the rubbers, may be used.

The natural rubber may be a sheet rubber or a block rubber, and all of grades #1 to #5 are usable.

Examples of synthetic rubbers that can be used include various diene-based synthetic rubbers, diene-based copolymeric rubbers, special rubbers, and modified rubbers. Specific examples thereof include: polybutadiene (BR); a copolymer of butadiene and an aromatic vinyl compound (for example, SBR or NBR); a butadiene-based copolymer such as a copolymer of butadiene and another diene-based compound; an isoprene-based polymer such as polyisoprene (IR), a copolymer of isoprene and an aromatic vinyl compound, or a copolymer of isoprene and another diene-based compound; chloroprene rubber (CR); butyl rubber (IIR); halogenated butyl rubber (X-IIR); ethylene-propylene-based copolymer rubber (EPM); ethylene-propylene-diene-based copolymeric rubber (EPDM); and any blend of these synthetic rubbers.

The rubber material for use in the tire frame may include other components, such as additives, added to rubber, in accordance with the purpose.

Examples of the additives include reinforcing agents such as carbon black, fillers, vulcanizers, vulcanization accelerators, fatty acids and salts thereof, metal oxides, process oils, and antiaging agents, and these may be added, as appropriate.

The tire frame containing a rubber material can be obtained by shaping an unvulcanized rubber material containing rubber in the unvulcanized state into a shape of the tire frame, and causing vulcanization of the rubber by heating.

(Elastic Material; Resin Material)

The resin material includes a resin (i.e., resin component), and may further include other components, such as additives, as far as advantageous effects according to the present invention are not impaired. The content of resin (i.e., resin component) in the tire frame is preferably 50% by mass or more, and more preferably 90% by mass or more, with respect to the entire tire frame. The tire frame can be formed using, for example, a resin material.

Examples of the resin contained in the tire frame include thermoplastic resins, thermoplastic elastomers, and thermosetting resins. The resin material preferably includes a thermoplastic elastomer, and more preferably includes a polyamide-based thermoplastic elastomer, from the viewpoint of ride comfortability during running.

Examples of the thermosetting resins include phenol-based thermosetting resins, urea-based thermosetting resins, melamine-based thermosetting resins, and epoxy-based thermosetting resins. These thermosetting resins may be used singly, or in combination of two or more thereof.

Examples of the thermoplastic resins include polyamide-based thermoplastic resins, polyester-based thermoplastic resins, olefin-based thermoplastic resins, polyurethane-based thermoplastic resins, vinyl-chloride-based thermoplastic resins, and polystyrene-based thermoplastic resins. These thermoplastic resins may be used singly, or in combination of two or more thereof. Among them, at least one selected from a polyamide-based thermoplastic resin, a polyester-based thermoplastic resin, or an olefin-based thermoplastic resin is preferable as a thermoplastic resin, and at least one selected from a polyamide-based thermoplastic resin or an olefin-based thermoplastic resin is more preferable.

Examples of the thermoplastic elastomers include a polyamide-based thermoplastic elastomer (TPA), a polystyrene-based thermoplastic elastomer (TPS), a polyurethane-based thermoplastic elastomer (TPU), an olefin-based thermoplastic elastomer (TPO), a polyester-based thermoplastic elastomer (TPEE), a thermoplastic cross-linked rubber (TPV), and other thermoplastic elastomers (TPZ), which are defined in JIS K6418:2007. Considering the elasticity required during running, formability at the time of production, and the like, it is preferable to use, as a resin in the resin material contained in the tire frame, at least one of a thermoplastic resin or a thermoplastic elastomer, and it is more preferable to use a thermoplastic elastomer.

In the present embodiment, it is preferable to use the same type of resin as that of the covering resin layer included in the resin-metal composite member from the viewpoint of adhesion property. For example, when a polyester-based thermoplastic resin or thermoplastic elastomer is contained in the covering resin layer, it is preferable to use a

polyester-based thermoplastic resin or thermoplastic elastomer also in the tire frame. When a polyamide-based thermoplastic resin or thermoplastic elastomer is used in the covering resin layer, it is preferable to use a polyamide-based thermoplastic resin or thermoplastic elastomer also in the tire frame.

-Polyamide-based Thermoplastic Elastomer-

The polyamide-based thermoplastic elastomer means a thermoplastic resin material formed from a copolymer that includes a polymer for forming a crystalline hard segment having a high melting point and a polymer for forming an amorphous soft segment having a low glass transition temperature, wherein the main chain of the polymer for forming a hard segment includes an amide bond (-CONH-).

An example of the polyamide-based thermoplastic elastomer is a material in which at least a polyamide forms a crystalline hard segment having a high melting point and in which another polymer (for example, a polyester or a polyether) forms an amorphous soft segment having a low glass transition temperature. The polyamide-based thermoplastic elastomer may be formed using, in addition to the hard segment and the soft segment, a chain extender such as a dicarboxylic acid.

Specific examples of the polyamide-based thermoplastic elastomer include an amide-based thermoplastic elastomer (TPA) defined in JIS K6418:2007 and a polyamide-based elastomer disclosed in Japanese Patent Application Laid-open (JP-A) No. 2004-346273.

The polyamide for forming a hard segment in the polyamide-based thermoplastic elastomer is, for example, a polyamide formed from a monomer represented by the following Formula (1) or Formula (2).

Formula (1): $H_2N\text{-}R^1\text{-}COOH$

In Formula (1), $R^1$ represents a hydrocarbon molecular chain having from 2 to 20 carbon atoms (for example, an alkylene group having from 2 to 20 carbon atoms).

Formula (2)

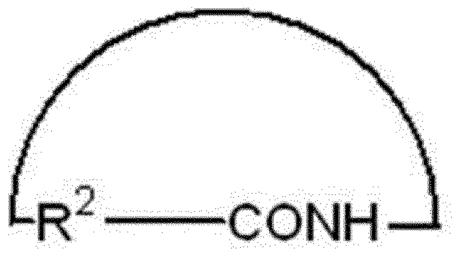

In Formula (2), $R^2$ represents a hydrocarbon molecular chain having from 3 to 20 carbon atoms (for example, an alkylene group having from 3 to 20 carbon atoms).

In Formula (1), $R^1$ is preferably a hydrocarbon molecular chain having from 3 to 18 carbon atoms (for example, an alkylene group having from 3 to 18 carbon atoms), more preferably a hydrocarbon molecular chain having from 4 to 15 carbon atoms (for example, an alkylene group having from 4 to 15 carbon atoms), and still more preferably a hydrocarbon molecular chain having from 10 to 15 carbon atoms (for example, an alkylene group having from 10 to 15 carbon atoms).

In Formula (2), $R^2$ is preferably a hydrocarbon molecular chain having from 3 to 18 carbon atoms (for example, an alkylene group having from 3 to 18 carbon atoms), a hydrocarbon molecular chain having from 4 to 15 carbon atoms (for example, an alkylene group having from 4 to 15 carbon atoms), and still more preferably a hydrocarbon molecular chain having from 10 to 15 carbon atoms (for example, an alkylene group having from 10 to 15 carbon atoms).

Examples of monomers represented by Formula (1) or Formula (2) include an co-aminocarboxylic acid, and a lactam. Examples of the polyamide for forming a hard segment include a polycondensate of an ω-aminocarboxylic acid, a polycondensate of a lactam, and a co-polycondensate of a diamine and a dicarboxylic acid.

Examples of the ω-aminocarboxylic acid include aliphatic ω-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Examples of the lactam include aliphatic lactams having from 5 to 20 carbon atoms, such as lauryllactam, ε-caprolactam, undecanelactam, ω-enantholactam, and 2-pyrrolidone.

Examples of the diamine include aliphatic diamines having from 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and metaxylenediamine.

The dicarboxylic acid may be represented by HOOC-$(R^3)_m$-COOH, wherein $R^3$ represents a hydrocarbon molecular chain having from 3 to 20 carbon atoms, and m represents 0 or 1. Examples of the dicarboxylic acid include aliphatic dicarboxylic acids having from 2 to 20 carbon atoms, such as oxalic acid, succinic acid, glutaric acid, adipic acid, pimelic acid, suberic acid, azelaic acid, sebacic acid, and dodecanedioic acid.

A polyamide obtained by ring-opening polycondensation of lauryllactam, ε-caprolactam, or undecanelactam can preferably be used as the polyamide for forming a hard segment.

Examples of the polymer for forming a soft segment include polyesters and polyethers, more specifically polyethylene glycol, polypropylene glycol, polytetramethylene ether glycol, and ABA-type triblock polyethers. These polymers may be used singly, or in combination of two or more thereof. Further, a polyether diamine obtained by allowing ammonia or the like to react with terminals of a polyether can also be used.

Here, the "ABA-type triblock polyether" refers to a polyether represented by the following Formula (3).

Formula (3)

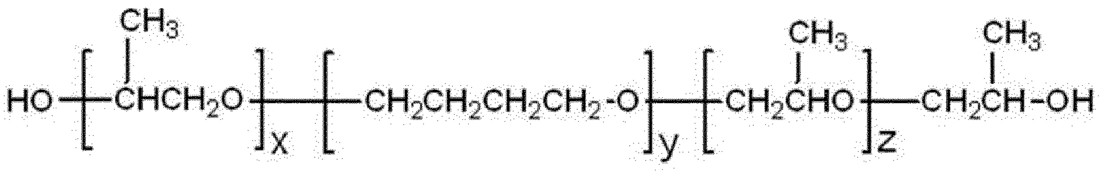

In Formula (3), each of x and z independently represents an integer from 1 to 20, and y represents an integer from 4 to 50.

In Formula (3), each of x and z is preferably an integer from 1 to 18, more preferably an integer from 1 to 16, still more preferably an integer from 1 to 14, and further more preferably an integer from 1 to 12. In Formula (3), y is preferably an integer from 5 to 45, more preferably an integer from 6 to 40, still more preferably an integer from 7 to 35, and further more preferably an integer from 8 to 30.

The combination of the hard segment and the soft segment is, for example, a combination of any of the above examples of hard segments and any of the above examples of soft segments. The combination of the hard segment and the soft segment is preferably a combination of a ring-opening polycondensate of laurylactam and polyethylene glycol, a combination of a ring-opening polycondensate of laurylactam and polypropylene glycol, a combination of a ring-opening polycondensate of laurylactam and polytetramethylene ether glycol, or a combination of a ring-opening polycondensate of laurylactam and an ABA-type triblock polyether, and is more preferably a combination of a ring-opening polycondensate of laurylactam and an ABA-type triblock polyether.

The number average molecular weight of the polymer (in this case, polyamide) for forming a hard segment is preferably from 300 to 15,000 from the viewpoint of melt formability. The number average molecular weight of the polymer for forming a soft segment is preferably from 200 to 6000 from the viewpoint of resilience and low-temperature flexibility. The ratio of the mass (x) of hard segments to the mass (y) of soft segments (x:y) is preferably from 50:50 to 90:10, and more preferably from 50:50 to 80:20, from the viewpoint of formability of the tire frame.

The polyamide-based thermoplastic elastomer can be synthesized by copolymerizing the polymer for forming a hard segment and the polymer for forming a soft segment, using a known method.

Examples of commercially available products of the polyamide-based thermoplastic elastomer include UBESTAXPA series products (for example, XPA9063X1, XPA9055X1, XPA9048X2, XPA9048X1, XPA9040X1, XPA9040X2, and XPA9044) manufactured by Ube Industries, Ltd., and VESTAMID series products (for example, E40-S3, E47-S1, E47-S3, E55-S1, E55-S3, EX9200, and E50-R2) manufactured by Daicel-Evonik Ltd.

Since the polyamide-based thermoplastic elastomer satisfies the properties required for tire frames concerning elastic modulus (i.e., flexibility), strength, and the like, the polyamide-based thermoplastic elastomer is preferable as a resin to be contained in the resin material. The polyamide-based thermoplastic elastomer exhibits excellent adhesion to thermoplastic resins or thermoplastic elastomers in many cases.

- Polystyrene-based Thermoplastic Elastomer -

Examples of the polystyrene-based thermoplastic elastomer include a material in which at least polystyrene forms a hard segment, and in which another polymer (for example, polybutadiene, polyisoprene, polyethylene, hydrogenated polybutadiene, or hydrogenated polyisoprene) forms an amorphous soft segment having a low glass transition temperature. A polystyrene obtained using, for example, a known radical polymerization method or an ionic polymerization method is preferably used as a polystyrene for forming a hard segment, and an example thereof is a polystyrene having

an anionic living polymerization. Examples of the polymer for forming a soft segment include polybutadiene, polyisoprene, and poly(2,3-dimethyl-butadiene).

The combination of the hard segment and the soft segment may be a combination of a hard segment selected from those described above and a soft segment selected from those described above. Of these, a combination of polystyrene and polybutadiene, and a combination of polystyrene and polyisoprene, are preferable combinations of the hard segment and the soft segment. Moreover, in order to reduce unintended crosslinking reactions of the thermoplastic elastomer, the soft segment is preferably hydrogenated.

The number average molecular weight of the polymer (in this case, polystyrene) for forming a hard segment is preferably from 5,000 to 500,000, and preferably from 10,000 to 200,000.

Moreover, the number average molecular weight of the polymer for forming a soft segment is preferably from 5,000 to 1,000,000, more preferably from 10,000 to 800,000, and still more preferably from 30,000 to 500,000. Moreover, from the viewpoint of formability of the tire frame, the volume ratio (x:y) of the hard segments (x) to the soft segments (y) is preferably from 5:95 to 80:20, and more preferably from 10:90 to 70:30.

The polystyrene-based thermoplastic elastomer can be synthesized by copolymerizing the polymer for forming a hard segment and the polymer for forming a soft segment, using a known method.

Examples of the polystyrene-based thermoplastic elastomer include styrenebutadiene-based copolymers [for example, SBS (polystyrene-poly(butylene)block-polystyrene), and SEBS (polystyrene-poly(ethylene/butylene)block-polystyrene)], styreneisoprene copolymers [polystyrene-polyisoprene block-polystyrene)], and styrene-propylene-based copolymers [SEP (polystyrene-(ethylene/propylene)block), SEPS (polystyrene-poly(ethylene/propylene)block-polystyrene), SEEPS (polystyrene-poly(ethylene-ethylene/propylene)block-polystyrene)], and SEB (polystyrene (ethylene/butylene)block).

Examples of commercially available products of the polystyrene-based thermoplastic elastomer include TUFTEC series products (for example, H1031, H1041, H1043, H1051, H1052, H1053, H1062, H1082, H1141, H1221, and H1272) manufactured by Asahi Kasei Corporation, and SEBS (such as 8007 and 8076) and SEPS (such as 2002 and 2063) manufactured by Kuraray Co., Ltd.

Polyurethane-based Thermoplastic Elastomer

Examples of the polyurethane-based thermoplastic elastomer include a material in which at least a polyurethane forms a hard segment having pseudo-crosslinks formed by physical aggregation, and in which another polymer forms an amorphous soft segment having a low glass transition temperature.

A specific example of the polyurethane-based thermoplastic elastomer is a polyurethane-based thermoplastic elastomer (TPU) defined in JIS K6418:2007. The polyurethane-based thermoplastic elastomer may specifically be expressed as a copolymer that includes a soft segment including a unit structure represented by the following Formula A and a hard segment including a unit structure represented by the following Formula B.

Formula A 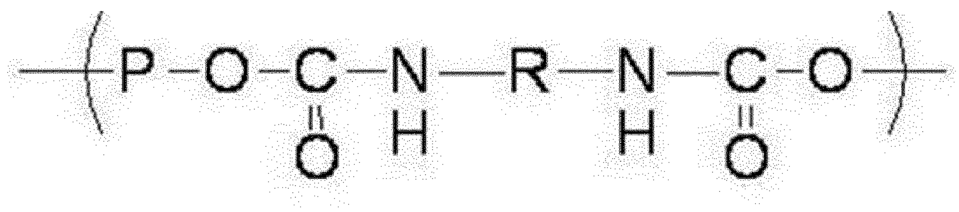

Formula B 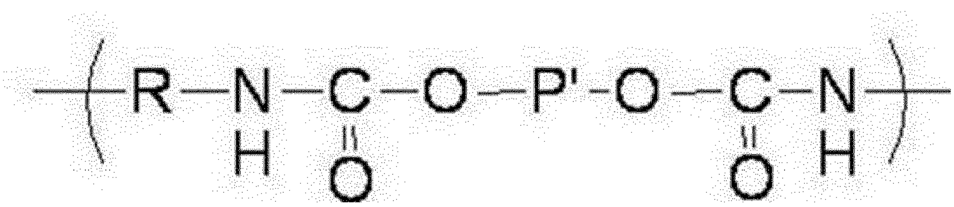

In Formula A and Formula B, P represents a long-chain aliphatic polyether or a long-chain aliphatic polyester; R represents an aliphatic hydrocarbon, an alicyclic hydrocarbon, or an aromatic hydrocarbon; P' represents a short-chain aliphatic hydrocarbon, an alicyclic hydrocarbon, or an aromatic hydrocarbon.

In the Formula A, the long-chain aliphatic polyether or the long-chain aliphatic polyester represented by P may have a molecular weight of, for example, from 500 to 5000. The long-chain aliphatic polyether or long-chain aliphatic polyester represented by P derives from a diol compound that includes the long-chain aliphatic polyether or long-chain

aliphatic polyester represented by P. Examples of such a diol compound include polyethylene glycols, polypropylene glycols, polytetramethylene ether glycols, poly(butylene adipate) diols, poly-ε-caprolactone diols, poly(hexamethylene carbonate) diols, and ABA-type triblock polyethers, each of which has a molecular weight within the range described above.

These compounds may be used singly, or in combination of two or more thereof.

In Formula A and Formula B, R represents a partial structure introduced using a diisocyanate compound that includes the aliphatic hydrocarbon, alicyclic hydrocarbon, or aromatic hydrocarbon represented by R. Examples of the aliphatic diisocyanate compound that includes the aliphatic hydrocarbon represented by R include 1,2-ethylene diisocyanate, 1,3-propylene diisocyanate, 1,4-butane diisocyanate, and 1,6-hexamethylene diisocyanate.

Moreover, examples of the diisocyanate compound that includes the alicyclic hydrocarbon represented by R include 1,4-cyclohexane diisocyanate and 4,4-cyclohexane diisocyanate. Moreover, examples of the aromatic diisocyanate compound that includes the aromatic hydrocarbon represented by R include 4,4'-diphenylmethane diisocyanate and tolylene diisocyanate.

These compounds may be used singly, or in combination of two or more thereof.

In the Formula B, the short-chain aliphatic hydrocarbon, alicyclic hydrocarbon, or aromatic hydrocarbon represented by P' may have a molecular weight of, for example, less than 500. Moreover, the short-chain aliphatic hydrocarbon, alicyclic hydrocarbon, or aromatic hydrocarbon represented by P' derives from a diol compound that includes the short-chain aliphatic hydrocarbon, alicyclic hydrocarbon, or aromatic hydrocarbon represented by P'. Examples of the aliphatic diol compound that includes the short-chain aliphatic hydrocarbon represented by P' include glycols and polyalkylene glycols, and examples thereof include ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.

Moreover, examples of the alicyclic diol compound that includes the alicyclic hydrocarbon represented by P' include cyclopentane-1,2-diol, cyclohexane-1,2-diol, cyclohexane-1,3-diol, cyclohexane-1,4-diol, and cyclohexane-1,4-dimethanol.

Furthermore, examples of the aromatic diol compound that includes the aromatic hydrocarbon represented by P' include hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenylether, 4,4'-dihydroxydiphenylsulfide, 4,4'-dihydroxydiphenylsulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.

These compounds may be used singly, or in combination of two or more thereof.

From the viewpoint of melt-formability, the number average molecular weight of the polymer (in this case, polyurethane) for forming a hard segment is preferably from 300 to 1500. Moreover, from the viewpoints of flexibility and thermal stability of the polyurethane-based thermoplastic elastomer, the number average molecular weight of the polymer for forming a soft segment is preferably from 500 to 20,000, more preferably from 500 to 5000, and particularly preferably from 500 to 3000. Moreover, from the viewpoint of formability of the tire frame, the mass ratio (x:y) of the hard segment (x) to the soft segment (y) is preferably from 15:85 to 90:10, and more preferably from 30:70 to 90:10.

The polyurethane-based thermoplastic elastomer can be synthesized by copolymerizing the polymer for forming a hard segment and the polymer for forming a soft segment, using a known method. An example of the polyurethane-based thermoplastic elastomer that can be used is the thermoplastic polyurethane described in Japanese Patent Application Laid-open (JP-A) No. H5-331256.

Specifically, the polyurethane-based thermoplastic elastomer is preferably a combination of a hard segment formed only from an aromatic diol and an aromatic diisocyanate and a soft segment formed only from a polycarbonate ester. More specifically, the polyurethane-based thermoplastic elastomer more preferably includes at least one selected from a copolymer of tolylene diisocyanate (TDI) and a polyester-based polyol, a copolymer of TDI and a polyether-based polyol, a copolymer of TDI and a caprolactone-based polyol, a copolymer of TDI and a polycarbonate-based polyol, a copolymer of 4,4'-diphenylmethane diisocyanate (MDI) and a polyester-based polyol, a copolymer of MDI and a polyether-based polyol, a copolymer of MDI and a caprolactone-based polyol, a copolymer of MDI and a polycarbonate-based polyol, or a copolymer of MDI and hydroquinone/polyhexamethylene carbonate, and more preferably includes at least one selected from a copolymer of TDI and a polyester-based polyol, a copolymer of TDI and a polyether-based polyol, a copolymer of MDI and a polyester polyol, a copolymer of MDI and a polyether-based polyol, or a copolymer of MDI and hydroquinone/polyhexamethylene carbonate.

Moreover, examples of commercially available products that can be used as the polyurethane-based thermoplastic elastomer include ELASTOLLAN series products (for example, ET680, ET880, ET690, and ET890) manufactured by BASF SE, KURAMIRON U series products (for example, 2000 series, 3000 series, 8000 series, and 9000 series) manufactured by Kuraray Co., Ltd., and MIRACTRAN series products (for example, XN-2001, XN-2004, P390RSUP, P480RSUI, P26MRNAT, E490, E590, and P890) manufactured by Nippon Miractran Co., Ltd.

Olefin-based Thermoplastic Elastomer

Examples of the olefin-based thermoplastic elastomer include a material in which at least a polyolefin forms a crystalline hard segment having a high melting point, and in which another polymer (such as a polyolefin, another polyolefin (for example, an olefin elastomer), or a polyvinyl compound) forms an amorphous soft segment having a low glass transition temperature. Examples of the polyolefin for forming a hard segment include polyethylene, polypropylene, isotactic polypropylene, and polybutene.

Examples of the olefin-based thermoplastic elastomer include olefin-α-olefin random copolymers and olefin block copolymers. Examples thereof include a propylene block copolymer, a copolymer of ethylene and propylene, a copolymer of propylene and 1-hexene, a copolymer of propylene and 4-methyl-1-pentene, a copolymer of propylene and 1-butene, a copolymer of ethylene and 1-hexene, a copolymer of ethylene and 4-methylpentene, a copolymer of ethylene and 1-butene, a copolymer of 1-butene and 1-hexene, 1-butene-4-methyl-pentene, a copolymer of ethylene and methacrylic acid, a copolymer of ethylene and methyl methacrylate, a copolymer of ethylene and ethyl methacrylate, a copolymer of ethylene and butyl methacrylate, a copolymer of ethylene and methyl acrylate, a copolymer of ethylene and ethyl acrylate, a copolymer of ethylene and butyl acrylate, a copolymer of propylene and methacrylic acid, a copolymer of propylene and methyl methacrylate, a copolymer of propylene and ethyl methacrylate, a copolymer of propylene and butyl methacrylate, a copolymer of propylene and methyl acrylate, a copolymer of propylene and ethyl acrylate, a copolymer of propylene and butyl acrylate, a copolymer of ethylene and vinyl acetate, and a copolymer of propylene and vinyl acetate.

Among them, the olefin-based thermoplastic elastomer preferably includes at least one selected from a propylene block copolymer, a copolymer of ethylene and propylene, a copolymer of propylene and 1-hexene, a copolymer of propylene and 4-methyl-1-pentene, a copolymer of propylene and 1-butene, a copolymer of ethylene and 1-hexene, a copolymer of ethylene and 4-methylpentene, a copolymer of ethylene and 1-butene, a copolymer of ethylene and methacrylic acid, a copolymer of ethylene and methyl methacrylate, a copolymer of ethylene and ethyl methacrylate, a copolymer of ethylene and butyl methacrylate, a copolymer of ethylene and methyl acrylate, a copolymer of ethylene and ethyl acrylate, a copolymer of ethylene and butyl acrylate, a copolymer of propylene and methacrylic acid, a copolymer of propylene and methyl methacrylate, a copolymer of propylene and ethyl methacrylate, a copolymer of propylene and butyl methacrylate, a copolymer of propylene and methyl acrylate, a copolymer of propylene and ethyl acrylate, a copolymer of propylene and butyl acrylate, a copolymer of ethylene and vinyl acetate, or a copolymer of propylene and vinyl acetate, and more preferably includes at least one selected from a copolymer of ethylene and propylene, a copolymer of propylene and 1-butene, a copolymer of ethylene and 1-butene, a copolymer of ethylene and methyl methacrylate, a copolymer of ethylene and methyl acrylate, a copolymer of ethylene and ethyl acrylate, or a copolymer of ethylene and butyl acrylate.

Moreover, two or more olefin resins, such as ethylene and propylene, may be used in combination. Moreover, the olefin resin content ratio in the olefin-based thermoplastic elastomer is preferably from 50% by mass to 100% by mass.

The number average molecular weight of the olefin-based thermoplastic elastomer is preferably from 5,000 to 10,000,000. When the number average molecular weight of the olefin-based thermoplastic elastomer is from 5,000 to 10,000,000, the thermoplastic resin material has satisfactory mechanical properties and excellent workability. From similar viewpoints, the number average molecular weight of the olefin-based thermoplastic elastomer is more preferably from 7,000 to 1,000,000, and is particularly preferably from 10,000 to 1,000,000. A number average molecular weight of the olefin-based thermoplastic elastomer within such ranges enables further improvements in the mechanical properties and workability of the thermoplastic resin material. From the viewpoints of toughness and low temperature flexibility, the number average molecular weight of the polymer for forming a soft segment is preferably from 200 to 6000. From the viewpoint of formability of the tire frame, the mass ratio (x:y) of the hard segment (x) to the soft segment (y) is preferably from 50:50 to 95:15, and is still more preferably from 50:50 to 90:10.

An olefin-based thermoplastic elastomer can be synthesized by copolymerization using a known method.

As the olefin-based thermoplastic elastomer, an acid-modified olefin-based thermoplastic elastomer may be used.

An "acid-modified olefin-based thermoplastic elastomer" means an olefin-based thermoplastic elastomer obtained by attachment of an unsaturated compound having an acid group such as a carboxylic acid group, a sulfuric acid group, or a phosphoric acid group to an olefin-based thermoplastic elastomer.

The attachment of an unsaturated compound having an acid group such as a carboxylic acid group, a sulfuric acid group, or a phosphoric acid group to an olefin-based thermoplastic elastomer includes, for example, attaching (for example, graft-polymerizing) an unsaturated bond site of an unsaturated carboxylic acid (for example, typically a maleic anhydride) as an unsaturated compound having an acid group to an olefin-based thermoplastic elastomer.

From the viewpoint of reducing deterioration of the olefin-based thermoplastic elastomer, the unsaturated compound having an acid group is preferably an unsaturated compound having a carboxylic acid group, which is a weakly acid group, and examples thereof include acrylic acid, methacrylic acid, itaconic acid, crotonic acid, isocrotonic

acid, and maleic acid.

Examples of commercially available products of the olefin-based thermoplastic elastomer that can be used include: TAFMER series products (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680) manufactured by Mitsui Chemicals, Inc.; NUCREL series products (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C) and ELVALOY AC series products (for example, 1125AC, 1209AC, 1218AC, 1609AC, 1820AC, 1913AC, 2112AC, 2116AC, 2615AC, 2715AC, 3117AC, 3427AC, and 3717AC) manufactured by Du Pont-Mitsui Polychemicals Co., Ltd.; ACRYFT series products and EVATATE series products manufactured by Sumitomo Chemical Co., Ltd.; ULTRA-SEN series products manufactured by Tosoh Corporation; and PRIME TPO series products (examples include, E-2900H, F-3900H, E-2900, F-3900, J-5900, E-2910, F-3910, J-5910, E-2710, F-3710, J-5910, E-2740, F-3740, R110MP, R110E, T310E, and M142E) manufactured by Prime Polymer Co., Ltd.

Polyester-based Thermoplastic Elastomer

The polyester-based thermoplastic elastomer is, for example, a material in which at least a polyester forms a crystalline hard segment having a high melting point, and in which another polymer (such as a polyester or a polyether) forms an amorphous soft segment having a low glass transition temperature.

The polyester to be used for forming a hard segment may be an aromatic polyester. The aromatic polyester may be formed from, for example, an aromatic dicarboxylic acid or an ester-forming derivative thereof, and an aliphatic diol.

The aromatic polyester is preferably polybutylene terephthalate derived from at least one of terephthalic acid or dimethyl terephthalate, and 1,4-butanediol. Moreover, the aromatic polyester may be a polyester derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof, and a diol having a molecular weight of 300 or less (examples of which include aliphatic diols such as ethylene glycol, trimethylene glycol, pentamethylene glycol, hexamethylene glycol, neopentyl glycol, and decamethylene glycol, alicyclic diols such as 1,4-cyclohexane dimethanol and tricyclodecane dimethylol, and aromatic diols such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, and 4,4'-dihydroxy-p-quaterphenyl). Moreover, the aromatic polyester may be a copolymer polyester formed using together two or more of the above dicarboxylic acid components and/or two or more of the above diol components. A polyfunctional carboxylic acid component, a polyfunctional oxyacid component, a polyfunctional hydroxy component, or the like, each of which is tri-functional or higher-functional, may be included in the copolymerization in a range of 5% by mol or less.

Examples of the polyester for forming a hard segment include polyethylene terephthalate, polybutylene terephthalate, polymethylene terephthalate, polyethylene naphthalate, and polybutylene naphthalate. Among them, polybutylene terephthalate is preferable.

Examples of the polymer for forming a soft segment include aliphatic polyesters and aliphatic polyethers.

Examples of the aliphatic polyethers include poly(ethylene oxide)glycol, poly(propylene oxide)glycol, poly(tetramethylene oxide)glycol, poly(hexamethylene oxide)glycol, a copolymer of ethylene oxide and propylene oxide, poly(propylene oxide)glycol with an added ethylene oxide polymer, and a copolymer of ethylene oxide and tetrahydrofuran.

Examples of the aliphatic polyesters include poly(ε-caprolactone), polyenantholactone, polycaprylolactone, polybutylene adipate, and polyethylene adipate.

Of these aliphatic polyethers and aliphatic polyesters, poly(tetramethylene oxide)glycol, an ethylene oxide adduct of poly(propylene oxide)glycol, poly(ε-caprolactone), polybutylene adipate, polyethylene adipate, and the like are preferable as the polymer for forming a soft segment, from the viewpoint of the elasticity characteristics of the polyester block copolymer obtained.

Moreover, from the viewpoints of toughness and flexibility at low temperature, the number average molecular weight of the polymer for forming a soft segment is preferably from 300 to 6000. Moreover, from the viewpoint of formability of the tire frame, the mass ratio (x:y) of the hard segments (x) to the soft segments (y) is preferably from 99:1 to 20:80, and more preferably from 98:2 to 30:70.

The combination of the hard segment and the soft segment may be a combination of a hard segment selected from those described above and a soft segment selected from those described above. Of these, the combination of the hard segment and the soft segment is preferably a combination in which the hard segment is polybutylene terephthalate, and in which the soft segment is an aliphatic polyether, and more preferably a combination in which the hard segment is polybutylene terephthalate, and in which the soft segment is poly(ethylene oxide)glycol.

Examples of commercially available products that can be used as the polyester-based thermoplastic elastomer

include HYTREL series products (for example, 3046, 5557, 6347, 4047N, and 4767N) manufactured by Du Pont-Toray Co., Ltd., and PELPRENE series products (such as P30B, P40B, P40H, P55B, P70B, P150B, P280B, P450B, P150M, S1001, S2001, S5001, S6001, and S9001) manufactured by Toyobo Co., Ltd.

The polyester-based thermoplastic elastomer can be synthesized by copolymerizing the polymer for forming a hard segment and the polymer for forming a soft segment, using a known method.

Other Components

The elastic material (for example, a rubber material or a resin material) may include components other than rubber or resin, as desired. Examples of the other components include resins, rubbers, various fillers (for example, silica, calcium carbonate, and clay), antiaging agents, oils, plasticizers, coloring developing agents, weather resistance-imparting agents, and reinforcing agents.

Properties of Elastic Material

When a resin material is used as the elastic material (i.e., in the case of a tire frame for a resin tire), the melting point of the resin contained in the resin material is, for example, approximately from 100 °C to 350 °C. From the viewpoint of durability and manufacturability of the tire, the melting point of the resin is preferably approximately from100°C to 250°C, and more preferably from 120°C to 250°C.

The tensile modulus of elasticity of the resin material-containing tire frame itself as defined in JIS K7113:1995 is preferably from 50 MPa to 1000 MPa, more preferably from 50 MPa to 800 MPa, and still more preferably from 50 MPa to 700 MPa. When the tensile modulus of elasticity of the elastic material is from 50 MPa to 1000 MPa, the tire can efficiently be mounted on a rim while maintaining the shape of the tire frame.

The tensile strength of the resin material-containing tire frame itself as defined in JIS K7113:1995 is usually from approximately 15 MPa to 70 MPa, preferably from 17 MPa to 60 MPa, and still more preferably from 20 MPa to 55 MPa.

The tensile strength at yield of the resin material-containing tire frame itself as defined in JIS K7113:1995 is preferably 5 MPa or more, more preferably from 5 MPa to 20 MPa, and particularly preferably from 5 MPa to 17 MPa. When the tensile strength at yield of the elastic material is 5 MPa or more, the tire can endure the deformation due to a load applied to the tire at running or the like.

The tensile elongation at yield of the resin material-containing tire frame itself as defined in JIS K7113:1995 is preferably 10% or more, more preferably from 10% to 70%, and still more preferably from 15% to 60%. When the tensile elongation at yield of the elastic material is 10% or more, the elastic range is large, and the fittability to a rim can be improved.

The tensile elongation at break of the resin material-containing tire frame itself as defined in JIS K7113:1995 is preferably 50% or more, more preferably 100% or more, particularly preferably 150% or more, and most preferably 200% or more. When the tensile elongation at break of the elastic material is 50% or more, the fittability to a rim is excellent, and the tire is resistant to breakage upon impact.

The deflection temperature under load of the resin material-containing tire frame itself, as defined in ISO75-2 or ASTM D648 (condition: application of a load of 0.45 MPa), is preferably 50°C or higher, more preferably from 50°C to 150°C, and particularly preferably from 50°C to 130°C. A deflection temperature under load of the elastic material of 50°C or higher enables deformation of the tire frame to be reduced even in a case in which vulcanization is performed during tire manufacture.

<Structure of Tire>

One embodiment of the tire according to the present embodiment is described below by reference to the drawings. Members having the same function and action may be assigned the same reference character throughout the figures, in which case descriptions for the reference character may be omitted.

The figures (Fig. 1A, Fig. 1B, Fig. 2, and Fig. 3) referred to in the following description are schematic views, and the sizes and shapes of the respective portions are exaggerated, as appropriate, in order to facilitate understanding. Although the resin-metal composite member is used in a belt portion in the following embodiment, the resin-metal composite member may be applied to other portions, such as a bead portion, in addition to the belt portion.

(First Embodiment)

First, a tire 10 according to a first embodiment is described below with reference to Figs. 1A and 1B.

Fig. 1A is a perspective view illustrating a cross-section of a part of a tire according to the first embodiment,

and Fig. 1B is a cross-sectional view of a bead portion in the state of being mounted on a rim. As illustrated in Fig. 1A, the tire 10 according to the first embodiment has a cross-sectional shape that is substantially similar to those of conventional general pneumatic rubber tires.

The tire 10 includes a tire frame 17 consisting of: a pair of bead portions 12 each configured to contact a bead seat portion 21 and a rim flange 22 of a rim 20; side portions 14 that each outwardly extend from its corresponding bead portion 12 in the tire radial direction; and a crown portion 16 (outer circumferential portion) that connects the tire-radial-direction outer end of one side portion 14 and the tire-radial-direction outer end of the other side portion 14. The tire frame 17 is formed using a resin material (for example, a resin material that includes a polyamide-based thermoplastic elastomer as a resin). The tire frame 17 may alternatively be formed using a rubber material.

The tire frame 17 is formed by disposing tire frame half parts (tire frame pieces) 17A, which have the same annular shape and have been formed by injection molding of one bead portion 12, one side portion 14 and a half-width part of the crown portion 16 as an integrated body, to face each other, and joining them together at the tire equatorial portion.

In the bead portion 12, an annular bead core 18 formed only of a steel cord similar to those used in conventional general pneumatic tires is embedded. An annular sealing layer 24 formed only of rubber, which is a material having a higher sealing property than that of the resin material forming the tire frame 17, is provided on a part of the bead portion 12 that contacts the rim 20 or at least on a part of the bead portion 12 that contacts the rim flange 22 of the rim 20.

A resin-metal composite member 26, which is a reinforcing cord, is helically wound in the circumferential direction in a state in which at least a part of the resin-metal composite member 26 is embedded in the crown portion 16 in cross-sectional view taken along the axial direction of tire frame 17. A tread 30 formed only of rubber, whic is a material having higher wear resistance than that of the resin material forming the tire frame 17, is disposed at the tire-radial-direction outer circumferential side of the resin-metal composite member 26. Details of the resin-metal composite member 26 are described below.

Although the tire frame 17 is formed of a resin material in the tire 10 according to the first embodiment, the tire frame 17 may alternatively be formed using a rubber material. Since the tire frame half parts 17A have a bilaterally symmetric shape, i.e., one of the tire frame half parts 17A has the same shape as the other tire frame half part 17A, there is also an advantage in that only one type of mold is required for forming the tire frame half parts 17A.

The tire frame 17 is formed of a single resin material in the tire 10 according to the first embodiment. However, the configuration is not limited thereto, and resin materials having different properties may be used for the respective portions (for example, the side portions 14, the crown portion 16, and the bead portions 12) of the tire frame 17, similarly to the configuration of conventional general pneumatic rubber tires. The tire frame 17 may be formed of a single rubber material. The tire frame 17 may be formed using rubber materials having different properties for the respective portions (for example, the side portions 14, the crown portion 16, and the bead portions 12) of the tire frame 17. A reinforcing member (for example, a polymer or metal fiber, a polymer or metal cord, a polymer or metal non-woven fabric, or a polymer or metal woven fabric) may be embedded in a portion of the tire frame 17 (such as the side portions 14, the crown portion 16, and the bead portions 12), so as to reinforce the tire frame 17 with the reinforcing member.

In the tire 10 according to the first embodiment, the tire frame half parts 17A are formed by injection molding. However, the molding method is not limited thereto, and the tire frame half parts 17A may alternatively formed by, for example, vacuum molding, pressure forming, or melt casting. Further, in the tire 10 according to the first embodiment, the tire frame 17 is formed by joining two members (i.e., the two tire frame half parts 17A). However, the manner of forming the tire frame 17 is not limited thereto, and the tire frame may alternatively be formed as one member by using, for example, a melting core method in which a low-melting-point metal is used, a split core method, or blow molding. Further, the tire frame 17 may be formed by joining three or more members.

In the bead portion 12 of the tire 10, an annular bead core 18 formed of a metal cord such as a steel cord is embedded. The resin-metal composite member according to the present embodiment may be used as a member including the bead core 18. For example, the bead portion 12 may be formed from the resin-metal composite member.

The bead core 18 may alternatively be formed, for example, of an organic fiber cord, a resin-coated organic fiber cord, or a hard resin, instead of a steel cord. The bead core 18 may be omitted as long as it is ensured that the bead portion 12 has rigidity, and mounting on the rim 20 can be performed successfully.

An annular sealing layer 24 formed only of rubber is provided on a part of the bead portion 12 that contacts the rim 20 or at least on a part of the bead portion 12 that contacts the rim flange 22 of the rim 20. The sealing layer 24 may also be provided in a part of the tire frame 17 at which the bead portion 12 and the bead seat 21 contact each other. When rubber is used as a material for forming the sealing layer 24, a rubber similar to rubber used on the outer surfaces of the bead portions of conventional general pneumatic rubber tires is preferably used. When the tire frame 17 includes a resin material, the rubber sealing layer 24 may be omitted as far as the sealing between the resin material in the tire frame 17 and the rim 20 can be ensured.

The sealing layer 24 may include another thermoplastic resin or thermoplastic elastomer that has a higher sealing property than that of the resin material contained in the tire frame 17. Examples of another thermoplastic resin

include a resin such as a polyurethane-based resin, an olefin-based resin, a polystyrene-based resin, or a polyester-based resin, and a blend of any of these resins with rubber or an elastomer. A thermoplastic elastomer may also be used, and examples thereof include a polyester-based thermoplastic elastomer, a polyurethane-based thermoplastic elastomer, or an olefin-based thermoplastic elastomer, a combination of two or more of these elastomers, and a blend of any of these elastomers with rubber.

The reinforcing belt member including the resin cord member 26 is described below with reference to Fig. 2. The resin-metal composite member according to the present embodiment may be used for the resin cord member 26.

Fig. 2 is a cross-sectional view of the tire 10 according to the first embodiment taken along the tire rotation axis, which illustrates a state in which the resin cord member 26 is embedded in the crown portion of the tire frame 17.

As illustrated in Fig. 2, the resin cord member 26 is helically wound in a state in which at least a part of the resin cord member 26 is embedded in the crown portion 16 in a cross-sectional view taken along the axial direction of the tire frame 17. The part of the resin cord member 26 that is embedded in the crown portion 16 is in close contact with the elastic material (for example, a rubber material or a resin material) contained in the crown portion 16 (i.e., the outer circumferential surface of the tire frame 17). In Fig. 2, L illustrates the depth of embedding of the resin cord member 26 in the crown portion 16 (i.e., the outer circumferential surface of tire frame 17) along the tire rotation axis direction. For example, in some embodiments, the depth L of embedding of the resin cord member 26 in the crown portion 16 is 1/2 of the diameter D of the resin cord member 26.

The resin cord member 26 has a structure in which a metal member 27 (for example, a steel cord formed of stranded steel fibers) serves as a core, and in which the outer circumference of the metal member 27 is covered with a resin covering layer 28 with an adhesion layer 25 disposed therebetween.

A tread 30 is disposed on the tire-radial-direction outer circumferential side of the resin cord member 26. In the tread 30, a tread pattern composed of plural grooves is formed on the contact surface that comes into contact with a road surface, similar tread patterns in conventional general pneumatic rubber tires.

For example, in the tire 10 in some embodiments, the resin cord member 26 including a covering with the covering resin layer 28 that includes a thermoplastic elastomer is embedded in the tire frame 17 that includes the same type of thermoplastic elastomer in a state in which the resin cord member 26 closely contacts the tire frame 17. Due to this configuration, the contact area between the covering resin layer 28, which covers the metal member 27, and the tire frame 17 increases, and the durability of adhesion between the resin cord member 26 and the tire frame 17 improves, as a result of which the durability of the tire is excellent.

The depth L of embedding of the resin cord member 26 in the crown portion 16 is preferably equal to or greater than 1/5 of the diameter D of the resin cord member 26, and more preferably more than 1/2 of the diameter D of the resin cord member 26. It is still more preferable that the entire resin cord member 26 is embedded in the crown portion 16. When the depth L of embedding of the resin cord member 26 is more than 1/2 of the diameter D of the resin cord member 26, the resin cord member 26 hardly drops off from the embedded portion due to the dimensions of the resin cord member 26. When the entire resin cord member 26 is embedded in the crown portion 16, the surface (the outer circumferential surface) becomes flat, whereby entry of air into an area around the resin cord member 26 can be reduced even when a member is placed on the crown portion 16 in which the resin cord member 26 is embedded.

In the tire 10 according to the first embodiment, the tread 30 is formed only of rubber. However, a tread formed only of a thermoplastic resin material having excellent wear resistance may alternatively be used instead of rubber.

• Resin Cord Member 26

Here, a configuration in which the resin-metal composite member according to the present embodiment is used as the resin cord member 26 is described.

The resin cord member 26 may be used, for example, as a belt layer formed by disposing one or more cord-shaped resin-metal composite members on the outer circumferential portion of a tire frame so as to run in the tire circumferential direction, or as an oblique intersection belt layer in which plural cord-shaped resin-metal composite members are disposed at an angle to the tire circumferential direction so as to intersect with each other.

The resin-metal composite members disposed at the outer circumferential portion of the tire frame are preferably disposed to have an average distance between adjacent metal members of 400 μm to 3200 μm, more preferably from 600 μm to 2200 μm, and still more preferably from 800 μm to 1500 μm.When the average distance between metal members in adjacent resin-metal composite members is 400 μm or more, there is a tendency that an increase in the weight of the tire is smaller, and that the fuel efficiency at running is excellent. When the average distance between metal members in adjacent resin-metal composite members is 3200 μm or less, there is a tendency that a sufficient effect with respect to tire reinforcement is obtained.

In the present specification, the *adjacent resin-metal composite members* refers to one resin-metal composite member and another resin-metal composite member that is positioned nearest to the one resin-metal composite member, and encompasses both of a case in which separate resin-metal composite members are adjacent to each other, and a

case in which different portions of the same resin-metal composite member are adjacent to each other (for example, a case in which one fiber formed of the resin-metal composite member is wound around the outer circumference of the tire frame plural times).

In the invention, the *average distance between metal members* refers to a value obtained by the following equation:

$$\text{Average distance between metal members} = \{\text{width of belt portion} - (\text{thickness of metal member} \times n)\}/(n-1)$$

In the equation, the *belt portion* refers to a portion at which resin-metal composite members are disposed on the outer circumferential portion of the tire frame.

In the equation, *n* represents the number of resin-metal composite members that are observed in a cross-section obtained by cutting the tire frame, which includes the resin-metal composite members disposed therein, along a direction orthogonal to the tire radial direction.

In the equation, the *width of belt portion* means the distance, along the outer circumferential surface of the tire frame, between resin-metal composite members that are positioned at both ends of the belt portion (positions farthest from the center line of the tire frame in the lateral direction) among resin-metal composite members observed in the cross-section.

In the equation, the *thickness of metal member* is a number average value of the measured thickness values at five freely-selected positions. The measured thickness value of the metal member refers to the largest diameter of the cross-section of the metal member (i.e., the distance between two freely-selected positions at which the distance between two freely-selected positions on the outline of the cross-section of the metal member assumes the largest value) when the metal member is formed only of one metal cord, and refers to the diameter of a smallest circle that encloses all of the cross-section areas of the plural metal cords observed in the cross-section of the metal member when the metal member is composed only of plural metal cords.

When metal members having different thicknesses are included in the belt portion, the *thickness of metal member* refers to the thickness of the thickest metal member.

Next, a method of manufacturing a tire according to the first embodiment is described.

[Tire Frame Forming Process]

First, tire frame half parts supported by thin metal support rings are aligned to face each other. Subsequently, a jointing mold is placed so as to contact outer circumferential surfaces of the tire frame half parts at an abutting portion. The jointing mold is configured to pressurize a region at or around the joint portion (the abutting portion) of the tire frame half parts 17A with a predetermined pressure (not illustrated in the figures). Then, the region at or around the joint portion of the tire frame half parts is pressurized at a temperature equal to or higher than the melting point (or softening point) of the resin contained in the resin material in the tire frame (for example, a polyamide-based thermoplastic elastomer in the first embodiment). When the joint portion of the tire frame half parts is heated and pressurized by the jointing mold, the joint portion is melted, and the tire frame half parts are fused with each other, as a result of which the members are integrated to form the tire frame 17.

[Resin Cord Member Forming Process]

Next, a resin cord member forming process is described in which a resin cord member is formed using the resin-metal composite member according to the present embodiment.

First, the metal member 27 is, for example, unwound from a reel, and a surface of the metal member 27 is washed. Then, the outer circumference of the metal member 27 is covered with an adhesive (for example, an adhesive that includes a polyester-based thermoplastic elastomer having a polar functional group and the additive A described above) extruded from an extruder, to form a layer that becomes the adhesive layer 25. A resin (for example, a polyester-based thermoplastic elastomer) extruded from an extruder is further coated thereon, to form the resin cord member 26 in which the outer circumference of the metal member 27 is covered with the covering resin layer 28 with the adhesion layer 25 disposed therebetween. Then, the resin cord member 26 obtained is wound on a reel 58.

[Resin Cord Member Winding Process]

Next, a resin cord member winding process is described with reference to Fig. 3. Fig. 3 is an explanatory

diagram explaining an operation to place the resin cord member in the crown portion of the tire frame using a resin cord member heating device and rollers. In Fig. 3, a resin cord member feeding apparatus 56 includes: a reel 58 on which the resin cord member 26 is wound; a resin cord heating device 59 disposed at the cord conveying direction downstream side of the reel 58; a first roller 60 disposed at the resin cord member 26 conveying direction downstream side of the cord heating device 59; a first cylinder device 62 for moving the first roller 60 in directions in which the first rollers comes into contact with and get away from the outer circumferential surface of the tire; a second roller 64 disposed at the resin cord member 26 conveying direction downstream side of the first roller 60; and a second cylinder device 66 for moving the second roller 64 in directions in which the second roller comes into contact with and get away from the outer circumferential surface of the tire. The second roller 64 can be used as a cooling roller formed of metal. The surface of the first roller 60 and the surface of the second roller 64 are coated with a fluororesin (for example, TEFLON (registered trademark) in the first embodiment) with a view to reducing adhesion of the melted or softened resin material. Through the above processing, the heated resin cord member is firmly integrated with the case resin of the tire frame.

The resin cord member heating device 59 includes a heater 70 and a fan 72 that generate hot air. The resin cord member heating device 59 includes a heating box 74 in which the resin cord member 26 passes through the inside space of the heating box 74 supplied with hot air, and a outlet 76 through which the heated resin cord member 26 exits the resin cord member heating device 59.

In the present process, first, the temperature of the heater 70 of the resin cord member heating device 59 is increased, and the air around the heater 70 heated by the heater 70 is sent to the heating box 74 by an air current generated by the rotation of the fan 72. Then, the resin cord member 26 drawn out from the reel 58 is fed to the inside of the heating box 74, of which the inner space is heated with hot air, whereby the resin cord member 26 is heated (for example, to increase the temperature of the resin cord member 26 to a temperature of approximately from 100°C to 250°C). The heated resin cord member 26 passes through the outlet 76, and is helically wound, with a constant tension, around the outer circumferential surface of the crown portion 16 of the tire frame 17 rotating in the direction indicated by arrow R in Fig. 3. Here, as a result of the covering resin layer of the heated resin cord member 26 coming into contact with the outer circumferential surface of the crown portion 16, the resin at the contact portion melts or softens, melt-fuses with the resin of the tire frame, and is integrated with the outer circumferential surface of the crown portion 16. In this process, since the resin cord member 26 also melt-fuses with an adjacent resin cord member 26, the resin cord members 26 are wound in a state in which there are no gaps therebetween. Accordingly, incorporation of air into the portion in which the reinforcing cord members 26 are embedded is reduced.

The depth L of embedding of the resin cord member 26 can be controlled by, for example, the heating temperature for the resin cord member 26, the tension applied to the resin cord member 26, and the pressure applied by the first roller 60. For example, in some embodiments, the depth L of embedding of the resin cord member 26 is set to a value that is at least 1/5 of the diameter D of the resin cord member 26.

Then, a belt-shaped tread 30 is wound around the outer circumferential surface of the tire frame 17, in which the resin cord member 26 is embedded, and the resultant body is placed in a vulcanization can or mold and heated (i.e., vulcanized). The tread 30 may be formed from unvulcanized rubber or vulcanized rubber.

The sealing layer 24 formed only of vulcanized rubber is adhered to the bead portions 12 of the tire frame 17 using an adhesive or the like, whereby manufacturing of the tire 10 is completed.

Although the joint portion of the tire frame half parts 17 is heated using a jointing mold in the method of manufacturing a tire according to the first embodiment, the present invention is not limited thereto. For example, the joining of the tire frame half parts 17A may alternatively be performed by heating the joint portion using, for example, a separately provided high frequency heater, or by softening or melting the joint portion in advance via application of hot air, irradiation with infrared radiation, or the like, and pressurizing the joint portion using the jointing mold.

In the method of manufacturing a tire according to the first embodiment, the resin cord member feeding apparatus 56 has two rollers, which are the first roller 60 and the second roller 64. However, the present invention is not limited thereto, and the resin cord member feeding apparatus 56 may have only one of the rollers (i.e., one roller).

Although a configuration in which the resin cord member 26 is heated such that a portion of the surface of the tire frame 17 that contacts the heated resin cord member 26 is melted or softened is adopted in the method of manufacturing a tire according to the first embodiment, the present invention is not limited to this configuration. For example, instead of heating the resin cord member 26, a hot airflow generation device may be used to directly heat the outer circumferential surface of the crown portion 16 in which the resin cord member 26 is to be embedded, and the resin cord member 26 may thereafter be embedded in the heated crown portion 16.

Although the heat source of the resin cord member heating device 59 includes the heater and the fan in the method of manufacturing a tire according to the first embodiment, the present invention is not limited to this configuration. A configuration may alternatively be adopted in which the resin cord member 26 is directly heated by radiation heat (for example, infrared radiation).

Although a configuration in which a region of the crown portion 16 at which the thermoplastic resin is melted or softened by embedding of the resin cord member 26 is forcibly cooled by the second roller 64 formed of metal is

adopted in the method of manufacturing a tire according to the first embodiment, the present invention is not limited to this configuration. A configuration may alternatively be adopted in which cold airflow is directly applied to the region at which the thermoplastic resin is melted or softened, to forcibly cool and solidify the region at which the thermoplastic resin is melted or softened.

Helically winding the resin cord member 26 is easy from the viewpoint of manufacture. However, a method in which discontinuous arrangement of resin cord members 26 is made in the width direction is also contemplated.

Although a configuration in which a belt-shaped tread 30 is wound around the outer circumferential surface of the tire frame 17 including the resin cord member 26 embedded therein, followed by heating (i.e., vulcanization) is adopted in the method of manufacturing a tire according to the first embodiment, the present invention is not limited thereto. A configuration may alternatively be adopted in which an already-vulcanized belt-shaped tread is adhered to the outer circumferential surface of the tire frame 17 using, for example, an adhesive. The already-vulcanized belt-shaped tread is, for example, a precured tread used in a retreaded tire.

The tire 10 in the first embodiment is what is referred to as a tubeless tire, in which an air chamber is formed between the tire 10 and the rim 20 by fitting the bead portions 12 to the rim 20. However, the present invention is not limited to this configuration, and a complete tube shape may be adopted.

The first embodiment is described above as an exemplary description in the present invention. In addition, the protection scope provided by the present invention is not limited to the above embodiment. The scope of the invention is only limited by the appended claims.

## EXAMPLES

Specific explanations are provided below with reference to examples in the present invention. However, the present invention is by no means limited to such examples. Unless otherwise indicated, "part(s)" is based on mass.

[Examples 1, 2, and 7-1 and Comparative Examples 1 and 2]

<Preparation of Resin-metal Composite Member>

A composition (more specifically, a composition for forming an adhesion layer) that was made up of the components and proportions indicated in Tables 1 and 2, and that had been melted by heating was applied onto a multifilament (specifically, a stranded fiber obtained by stranding seven monofilaments having a diameter Φ of 0.35 mm (made of steel, having a specific strength of 280 N, and an elongation of 3%)) as a metal member having an average diameter Φ of 1.15 mm, in the manner described in the Resin Cord Member Forming Process in the method of manufacturing a tire in the first embodiment, as a result of which a layer that would serve as an adhesion layer was formed.

Thereafter, a composition (more specifically, a composition for forming a covering resin layer) that was made up of the components and proportions indicated in Tables 1 and 2, and that was extruded from an extruder was applied onto the outer circumference of the layer that would serve as an adhesion layer, followed by cooling. The extrusion conditions include a temperature of the metal member of 200 °C, a temperature of the composition for forming a covering resin layer of 240 °C, and an extrusion rate of 30 m/min.

In this way, a resin-metal composite member having a structure in which the outer circumference of the multifilament (i.e., a metal member) was covered with a covering resin layer with an adhesion layer disposed therebetween was prepared.

The average thickness of the adhesion layer and the average thickness of the covering resin layer in the resin-metal composite member are indicated in Tables 1 and 2.

<Production of Tire Including Resin-metal Composite Member as Reinforcing Belt Member>

A tire frame formed from a resin material made only of a polyester-based thermoplastic elastomer (HYTREL 5557 manufactured by DU PONT-TORAY CO., LTD., having a melting point of 207 °C) was prepared according to the method of manufacturing a tire in the first embodiment.

Subsequently, using the resin-metal composite member obtained and the tire frame obtained, a green tire was produced in which the resin-metal composite member was disposed to be wound around the crown portion of the tire frame, and in which unvulcanized tread rubber was disposed thereon. The disposing of the resin-metal composite member on the tire frame was performed such that the average distance between metal members of adjacent portions of the resin-metal composite member was 1000 μm. The tire size was set to 245/3 5R18. The thickness of the tread rubber was set to 10 mm.

The green tire produced was heated under a condition of 170 °C and 18 minutes (in other words, vulcanization of the tread rubber was performed).

<Measurement of Tensile Modulus of Elasticity>

Separately from the production of a tire described above, a sample for tensile strength measurement in which conditions for heating the tire (i.e., vulcanization of the tread rubber) was reproduced was prepared.

Specifically, a 2 mm-thick plate was prepared by injection molding of a composition for forming a covering resin layer made up of the components and proportions indicated in Tables 1 and 2, and a JIS type 3 dumbbell test piece was cut out from the plate, whereby a sample for measuring the elastic modulus of the covering resin layer was prepared. In a similar manner, a 2 mm-thick plate was prepared by injection molding of a composition for forming an adhesion layer made up of the components and proportions indicated in Tables 1 and 2, and a JIS type 3 dumbbell test piece was cut out from the plate, whereby a sample for measuring the elastic modulus of the adhesion layer was prepared.

A tire was subjected to vulcanization under the same condition as that applied to a tire in each of the Examples and Comparative Examples, and the temperature of the adhesion layer portion of the resin-metal composite member at or around the tire center line portion was measured during the vulcanization. In order to apply the heat history, which was the same as that applied to the tire, to the samples, the samples were subjected to heat treatment under the temperature condition determined by the above measurement and for the period of time taken for vulcanization. The samples after the heat treatment were respectively used as a sample piece for measurement of the elastic modulus of the covering resin layer and a sample piece for measurement of the elastic modulus of the adhesion layer.

Using the sample piece for measurement of the elastic modulus of the covering resin layer and the sample piece for measurement of the elastic modulus of the adhesion layer, the tensile modulus of elasticity of the covering resin layer and the tensile modulus of elasticity of the adhesion layer were measured according to the above-described method. The results thereof are shown in Tables 1 and 2.

<Initial Adhesion Property Test>

The adhesion layer and the covering resin layer were peeled from the metal member directly after the preparation of the resin-metal composite member, and the peel force during the peeling was measured as an indicator of the adhesion property between the adhesion layer and the metal member, and between the covering resin layer and the adhesion layer.

Specifically, a 180° peel test was carried out at a pulling rate of 100 mm/min in room environment (specifically, at 25 °C) using a TENSIRON RTF-1210 manufactured by A&D Company Ltd., thereby measuring the peel force (unit: N). Based on the measurement value, the adhesion property was evaluated according to the following criteria.

(Evaluation Criteria)

A: The peel force is 10 N or more
B: The peel force is less than 10 N

<Belt Bending Fatigue Test>

First, a test sample for a belt bending fatigue test machine was prepared. Specifically, the test sample prepared was a coated cord having a thickness of 2.1 mm, a width of 2.5 mm, and a length of 500 mm prepared by coating one cord (specifically, a monofilament having a diameter Φ of 0.35 mm (a steel cord (SC), having a specific strength of 280 N and an elongation of 3%)) with an adhesion layer and a covering resin layer.

Using a belt bending fatigue test machine manufactured by Takachiho Inc. as the test machine, the test sample (i.e., the SC coated with an adhesion layer and a covering resin) was hung in a U-shape on a shaft, and the test sample was bent 40,000 times in the vertical direction in a state in which a load was applied to both ends of the test sample. The test conditions included use of a 62 mm shaft, a bending rate of 125 cpm (cycles per minute, 2Hz), and a load of 55.5 N, and measurements were made with respect to whether or not SC breakage occurred and of the peeling force values before and after the test (the peeling force as measured by the method used in the initial adhesion property test described above). Evaluation was made according to the following criteria.

(Evaluation Criteria)

A: The SC does not break, and a decrease in the peeling force is less than 20%
B: The SC does not break, and a decrease in the peeling force is from 20% to less than 50%

C: The SC breaks, and the peeling force decreases by 50% or more from the initial peeling force

Here, SC breakage refers to a state in which at least one monofilament breaks due to kinks and/or a shear force.

<Plunger Test>

The obtained tire was fitted to a rim, air was filled to a normal internal pressure, and a plunger energy test was carried out according to JIS D4230 (1998). The results are indicated by index values assuming that the plunger energy of the tire in Comparative Example 1 is the standard value (100 (C)). A greater value indicates a more favorable result.

(Evaluation Criteria)

A: more than 120

B: from more than 100 to 120

C: 100 or less

Table 1

| | | | Examples | | |
|---|---|---|---|---|---|
| | | | 1 | 2 | 7-1 |
| Covering Resin Layer | Composition | Covering Resin P-1 | 100 | 100 | 100 |
| | | Covering Resin P-2 | | | |
| | | Covering Resin P-3 | | | |
| | | PBT | | | |
| | | Amorphous Resin 1 | | | |
| | | Amorphous Resin 2 | | | |
| | | Amorphous Resin 3 | | | |
| | Average Thickness (μm) | | 470 | 470 | 470 |
| | Tensile Modulus of Elasticity (MPa) | | 140 | 140 | 140 |
| Adhesion Layer | Composition | Adhesive G-1 | 90 | 60 | 60 |
| | | Adhesive G-2 | | | |
| | | PBT | 10 | 40 | |
| | | GF | | | |
| | | GB | | | |
| | | Talc | | | |
| | | Amorphous Resin 1 | | | 40 |
| | | Amorphous Resin 2 | | | |
| | | Amorphous Resin 3 | | | |
| | Average Thickness (μm) | | 30 | 30 | 30 |
| | Tensile Modulus of Elasticity (MPa) | | 430 | 930 | 850 |

(continued)

| | | Examples | | |
|---|---|---|---|---|
| | | 1 | 2 | 7-1 |
| Evaluation | Initial Adhesion Property Test | A | A | A |
| | Belt Bending Fatigue Test | A | A | A |
| | Plunger Test | B | A | A |

Table 2

| | | | Comparative Examples | |
|---|---|---|---|---|
| | | | 1 | 2 |
| Covering Resin Layer | Composition | Covering Resin P-1 | 100 | 100 |
| | | Covering Resin P-2 | | |
| | | Covering Resin P-3 | | |
| | | PBT | | |
| | | Amorphous Resin 1 | | |
| | | Amorphous Resin 2 | | |
| | | Amorphous Resin 3 | | |
| | Average Thickness (μm) | | 470 | 470 |
| | Tensile Modulus of Elasticity (MPa) | | 140 | 140 |
| Adhesion Layer | Composition | Adhesive G-1 | 100 | 40 |
| | | Adhesive G-2 | | |
| | | PBT | | 60 |
| | | GF | | |
| | | GB | | |
| | | Talc | | |
| | | Amorphous Resin 1 | | |
| | | Amorphous Resin 2 | | |
| | | Amorphous Resin 3 | | |
| | Average Thickness (μm) | | 30 | 30 |
| | Tensile Modulus of Elasticity (MPa) | | 300 | 1260 |
| Evaluation | Initial Adhesion Property Test | | A | B |
| | Belt Bending Fatigue Test | | A | B |
| | Plunger Test | | C | A |

The unit for the compositions indicated in the tables is "part(s)" unless otherwise indicated. The components mentioned in the tables are as follows.

(Covering Resin Layer)

- P-1: HYTREL 5557, which is a polyester-based thermoplastic elastomer manufactured by DU PONT-TORAY CO., LTD. and has a melting point of 207 °C
- P-2: HYTREL 6347, which is a polyester-based thermoplastic elastomer manufactured by DU PONT-TORAY CO., LTD. and has a melting point of 215 °C
- P-3: HYTREL 2571, which is a polyester-based thermoplastic elastomer manufactured by DU PONT-TORAY CO., LTD. and has a melting point of 228 °C

(Adhesion Layer)

- G-1: PRIMALLOY AP GQ730, which is a maleic-anhydride-modified polyester-based thermoplastic elastomer manufactured by Mitsubishi Chemical Corporation and has a melting point of 204 °C and an elastic modulus of 300 MPa
- G-2: PRIMALLOY AP GQ331, which is a maleic-anhydride-modified polyester-based thermoplastic elastomer manufactured by Mitsubishi Chemical Corporation and has a melting point of 183 °C and an elastic modulus of 25 MPa

(Additives)

- PBT: TORAYCON 1401X06, which is a polybutylene terephthalate resin (PBT) manufactured by Toray Industries, Ltd
- Amorphous Resin 1: amorphous polyester-based thermoplastic resin (VYLON 270 manufactured by Toyobo Corporation, having a glass transition temperature of 67 °C)
- Amorphous Resin 2: amorphous polycarbonate-based thermoplastic resin (NOVAREX 7020IR manufactured by Mitsubishi Engineering Plastics Corporation, having a Tg of 120 °C)
- Amorphous Resin 3: amorphous styrene-based thermoplastic elastomer (SEBS) (TUFTEC H1052 manufactured by Asahi Kasei Corporation, having a Tg of -47 °C)
- GF: CS3PE-941, which is a glass fiber manufactured by Nitto Boseki Co., Ltd. and has a fiber diameter (i.e., length in the long axis direction) of 13 μm
- GB: EGB731, which is a glass bead manufactured by Potters-Ballotini Co., Ltd. and has an average particle diameter of 20 μm
- Talc: P-4 manufactured by Nippon Talc Co., Ltd., having an average particle diameter D50 of 4.5 μm

[Examples 20]

Tires were produced in the same manner as those in Examples 2, except that the tire frame made of a resin was replaced by a tire frame made of rubber (i.e. rubber tire). The production of tires is described in detail below.

The following components were mixed, and kneaded using a Banbury mixer (MIXTRON BB mixer available from Kobe Steel, Ltd.), whereby a rubber material was obtained. A tire frame for a rubber tire in which at least the crown portion was formed of the obtained rubber material was produced using a known method.

| | |
|---|---|
| • Natural Rubber (NR, RSS#3, rubber component) | 80 parts |
| • Styrene-butadiene Rubber (SBR, JSR1502 available from JSR Corporation, rubber component) | 20 parts |
| • Carbon Black (C/B, Asahi #51 available from Asahi Carbon Co., Ltd.) | 50 parts |
| • Stearic Acid | 2 parts |
| • Zinc Oxide | 3 parts |
| • Sulfur | 3 parts |
| • Vulcanization Accelerator (available from Ouchi Shinko Chemical Industrial Co., Ltd.) | 1 part |
| • Process Oil (DIANA process oil PW380 available from Idemitsu Kosan Co., Ltd.) | |
| • Antiaging Agent (NOCRAC 6C available from Ouchi Shinko Chemical Industrial Co., Ltd.) | 0.2 parts |
| | 1.5 parts |

Then, using the resin-metal composite member and the tire frame obtained, a green tire in which the resin-metal composite member was disposed to be wound around the crown portion of the tire frame, and in which the unvulcanized tread rubber was further disposed thereon was produced. The arrangement of the resin-metal composite

member on the tire frame, the tire size, and the thickness of the tread rubber were the same as those in Example 1.

The green tire produced was subjected to heating (i.e., vulcanization of the tire frame rubber and the tread rubber) at 170 °C for 18 minutes.

Table 3

| | | | Examples |
|---|---|---|---|
| | | | 20 |
| Covering Resin Layer | Composition | Covering Resin P-1 | 100 |
| | | Covering Resin P-2 | |
| | | Covering Resin P-3 | |
| | | PBT | |
| | | Amorphous Resin 1 | |
| | | Amorphous Resin 2 | |
| | | Amorphous Resin 3 | |
| | Average Thickness (μm) | | 470 |
| | Tensile Modulus of Elasticity (MPa) | | 140 |
| Adhesion Layer | Composition | Adhesive G-1 | 60 |
| | | Adhesive G-2 | |
| | | PBT | 40 |
| | | GF | |
| | | GB | |
| | | Talc | |
| | | Amorphous Resin 1 | |
| | | Amorphous Resin 2 | |
| | | Amorphous Resin 3 | |
| | Average Thickness (μm) | | 30 |
| | Tensile Modulus of Elasticity (MPa) | | 930 |
| Evaluation | Initial Adhesion Property Test | | A |
| | Belt Bending Fatigue Test | | A |
| | Plunger Test | | A |

As is clear from the evaluation results indicated in Tables 1 to 3, inventive examples, in which the adhesion layer includes a polyester-based thermoplastic elastomer having a polar functional group, as well as at least one additive A selected from the group consisting of an amorphous resin including an ester bond, a polyester-based thermoplastic resin, and a filler, and in which the content ratio of the polyester-based thermoplastic elastomer having a polar functional group is 50% by mass or more with respect to the entire adhesion layer, exhibited excellent adhesion durability as compared to the Comparative Examples.

## Claims

1. A resin-metal composite member (26) for a tire (10), the composite member comprising a metal member (27), an adhesion layer (25), and a covering resin layer (28) in this order,
   **characterized in that** the adhesion layer (25) includes a polyester-based thermoplastic elastomer having a polar functional group, and at least one additive A selected from the group consisting of an amorphous resin including an ester bond, a polyester-based thermoplastic resin and a filler, and a content ratio of the polyester-based thermoplastic

elastomer having a polar functional group is 50% by mass or more with respect to the entire adhesion layer (25).

2. The resin-metal composite member (26) for a tire (10) according to claim 1, wherein the polyester-based thermoplastic elastomer having a polar functional group has, as the polar functional group, at least one selected from the group consisting of an epoxy group, a carboxy group, an anhydride of a carboxy group and an amino group.

3. The resin-metal composite member (26) for a tire (10) according to claim 1 or claim 2, wherein the amorphous resin including an ester bond includes at least one selected from the group consisting of an amorphous polyester-based thermoplastic resin and an amorphous polycarbonate-based thermoplastic resin.

4. The resin-metal composite member (26) for a tire (10) according to any one of claims 1 to 3, wherein a content ratio of the amorphous resin including an ester bond is from 10% by mass to 50% by mass with respect to the entire adhesion layer (25).

5. The resin-metal composite member for a tire (10) according to any one of claims 1 to 4, wherein the polyester-based thermoplastic resin includes at least one selected from the group consisting of a polybutylene terephthalate, polyethylene terephthalate, polybutylene naphthalate and polyethylene naphthalate.

6. The resin-metal composite member (26) for a tire (10) according to any one of claims 1 to 5, wherein a content ratio of the polyester-based thermoplastic resin is from 10% by mass to 50% by mass, with respect to the entire adhesion layer (25).

7. The resin-metal composite member (26) for a tire (10) according to any one of claims 1 to 6, wherein the filler includes at least one selected from the group consisting of a glass particle, a glass fiber and talc.

8. The resin-metal composite member (26) for a tire (10) according to any one of claims 1 to 7, wherein a content of the filler is from 3% by mass to 10% by mass, with respect to the entire adhesion layer (25).

9. The resin-metal composite member (26) for a tire (10) according to any one of claims 1 to 8, wherein the covering resin layer (28) includes at least one additive B selected from the group consisting of an amorphous resin including an ester bond, a polyester-based thermoplastic resin and a filler, and a content of the additive A in the adhesion layer (25) is higher than a content of the additive B in the covering resin layer (28).

10. A tire (10), comprising:

an annular tire frame (17) including an elastic material, and
the resin-metal composite member (26) for a tire (10) according to any one of claims 1 to 9.

11. The tire (10) according to claim 10, wherein the resin-metal composite member (26) for a tire (10) forms a reinforcing belt member to be wound around an outer circumferential portion of the tire frame (17) in a circumferential direction.

12. The tire (10) according to claim 10, wherein the resin-metal composite member (26) for a tire (10) forms a bead member.

## Patentansprüche

1. Harz-Metall-Verbundstoffelement (26) für einen Reifen (10), wobei das Verbundstoffelement ein Metallelement (27), eine Haftschicht (25) und eine bedeckende Harzschicht (28), in dieser Reihenfolge, umfasst,
**dadurch gekennzeichnet, dass** die Haftschicht (25) ein thermoplastisches Elastomer auf Polyesterbasis, das eine polare funktionelle Gruppe aufweist, und mindestens ein Zusatzmittel A umfasst ausgewählt aus der Gruppe bestehend aus einem amorphen Harz, das eine Esterbindung umfasst, einem thermoplastischen Harz auf Polyesterbasis und einem Füllstoff und ein Gehaltsverhältnis des thermoplastischen Elastomers auf Polyesterbasis, das eine polare funktionelle Gruppe aufweist, 50 Masse-% oder mehr in Bezug auf die gesamte Haftschicht (25) beträgt.

2. Harz-Metall-Verbundstoffelement (26) für einen Reifen (10) nach Anspruch 1, wobei das thermoplastische Elastomer auf Polyesterbasis, das eine polare funktionelle Gruppe aufweist, als polare funktionelle Gruppe mindestens eines aufweist ausgewählt aus der Gruppe bestehend aus einer Epoxygruppe, einer Carboxygruppe, einem Anhydrid

einer Carboxygruppe und einer Aminogruppe.

3. Harz-Metall-Verbundstoffelement (26) für einen Reifen (10) nach Anspruch 1 oder Anspruch 2, wobei das amorphe Harz, das eine Esterbindung umfasst, mindestens eines umfasst ausgewählt aus der Gruppe bestehend aus einem amorphen thermoplastischen Harz auf Polyesterbasis und einem amorphen thermoplastischen Harz auf Polycarbonatbasis.

4. Harz-Metall-Verbundstoffelement (26) für einen Reifen (10) nach einem der Ansprüche 1 bis 3, wobei ein Gehaltsverhältnis des amorphen Harzes, das eine Esterbindung umfasst, 10 Masse-% bis 50 Masse-% in Bezug auf die gesamte Haftschicht (25) beträgt.

5. Harz-Metall-Verbundstoffelement für einen Reifen (10) nach einem der Ansprüche 1 bis 4, wobei das thermoplastische Harz auf Polyesterbasis mindestens eines umfasst ausgewählt aus der Gruppe bestehend aus einem Polybutylenterephthalat, Polyethylenterephthalat, Polybutylennaphthalat und Polyethylennaphthalat.

6. Harz-Metall-Verbundstoffelement für einen Reifen (10) nach einem der Ansprüche 1 bis 5, wobei ein Gehaltsverhältnis des thermoplastischen Harzes auf Polyesterbasis 10 Masse-% bis 50 Masse-% in Bezug auf die gesamte Haftschicht (25) beträgt.

7. Harz-Metall-Verbundstoffelement (26) für einen Reifen (10) nach einem der Ansprüche 1 bis 6, wobei der Füllstoff mindestens eines umfasst ausgewählt aus der Gruppe bestehend aus einem Glaspartikel, einer Glasfaser und Talkum.

8. Harz-Metall-Verbundstoffelement (26) für einen Reifen (10) nach einem der Ansprüche 1 bis 7, wobei ein Gehalt des Füllstoffs 3 Masse-% bis 10 Masse % in Bezug auf die gesamte Haftschicht (25) beträgt.

9. Harz-Metall-Verbundstoffelement (26) für einen Reifen (10) nach einem der Ansprüche 1 bis 8, wobei die bedeckende Harzschicht (28) mindestens ein Zusatzmittel B ausgewählt aus der Gruppe bestehend aus einem amorphen Harz, das eine Esterbindung umfasst, einem thermoplastischen Harz auf Polyesterbasis und einem Füllstoff umfasst, und ein Gehalt des Zusatzmittels A in der Haftschicht (25) höher als ein Gehalt des Zusatzmittels B in der bedeckenden Harzschicht (28) ist.

10. Reifen (10) umfassend:

    einen runden Reifenrahmen (17) umfassend ein elastisches Material und
    das Harz-Metall-Verbundstoffelement (26) für einen Reifen (10) nach einem der Ansprüche 1 bis 9.

11. Reifen (10) nach Anspruch 10, wobei das Harz-Metall-Verbundstoffelement (26) für einen Reifen (10) ein Verstärkungsgürtelelement bildet, das um einen äußeren zirkumferentiellen Teil des Reifenrahmens (17) in einer zirkumferentiellen Richtung gewunden werden soll.

12. Reifen (10) nach Anspruch 10, wobei das Harz-Metall-Verbundstoffelement (26) für einen Reifen (10) ein Wulstelement bildet.

## Revendications

1. Élément composite de résine-métal (26) pour un pneumatique (10), l'élément composite comprenant un élément métallique (27), une couche d'adhésion (25), et une couche de résine de recouvrement (28) dans cet ordre, **caractérisé en ce que** la couche d'adhésion (25) comprend un élastomère thermoplastique à base de polyester ayant un groupe fonctionnel polaire, et au moins un additif A sélectionné dans le groupe constitué d'une résine amorphe incluant une liaison ester, une résine thermoplastique à base de polyester et une charge, et un rapport de la teneur de l'élastomère thermoplastique à base de polyester ayant un groupe fonctionnel polaire étant de 50 % en masse ou plus par rapport à la couche d'adhésion (25) entière.

2. Élément composite de résine-métal (26) pour un pneumatique (10) selon la revendication 1, l'élastomère thermoplastique à base de polyester ayant un groupe fonctionnel polaire ayant, comme groupe fonctionnel polaire, au moins un élément sélectionné dans le groupe constitué d'un groupe époxy, d'un groupe carboxy, d'un anhydride

d'un groupe carboxy et d'un groupe amino.

**3.** Élément composite de résine-métal (26) pour un pneumatique (10) selon la revendication 1 ou la revendication 2, la résine amorphe comprenant une liaison ester comprenant au moins une résine sélectionnée dans le groupe constitué d'une résine thermoplastique à base de polyester amorphe et d'une résine thermoplastique à base de polycarbonate amorphe.

**4.** Élément composite de résine-métal (26) pour un pneumatique (10) selon l'une quelconque des revendications 1 à 3, un rapport de la teneur de la résine amorphe comprenant une liaison ester étant de 10 % en masse à 50 % en masse par rapport à la couche d'adhésion (25) entière.

**5.** Élément composite de résine-métal pour un pneumatique (10) selon l'une quelconque des revendications 1 à 4, la résine thermoplastique à base de polyester comprenant au moins un élément sélectionné dans le groupe constitué d'un poly(téréphtalate de butylène), d'un poly(téréphtalate d'éthylène), d'un poly(naphtalate de butylène) et d'un poly(naphtalate d'éthylène).

**6.** Élément composite de résine-métal (26) pour un pneumatique (10) selon l'une quelconque des revendications 1 à 5, un rapport de la teneur de la résine thermoplastique à base de polyester étant de 10 % en masse à 50 % en masse, par rapport à la couche d'adhésion (25) entière.

**7.** Élément composite de résine-métal (26) pour un pneumatique (10) selon l'une quelconque des revendications 1 à 6, la charge comprenant au moins un élément sélectionné dans le groupe constitué d'une particule de verre, d'une fibre de verre et du talc.

**8.** Élément composite de résine-métal (26) pour un pneumatique (10) selon l'une quelconque des revendications 1 à 7, une teneur de la charge étant de 3 % en masse à 10 % en masse, par rapport à la couche d'adhésion (25) entière.

**9.** Élément composite de résine-métal (26) pour un pneumatique (10) selon l'une quelconque des revendications 1 à 8, la couche de résine de recouvrement (28) comprenant au moins un additif B sélectionné dans le groupe constitué d'une résine amorphe comprenant une liaison ester, une résine thermoplastique à base de polyester et une charge, et une teneur de l'additif A dans la couche d'adhésion (25) étant supérieure à une teneur de l'additif B dans la couche de résine de recouvrement (28).

**10.** Pneumatique (10), comprenant:

une carcasse de pneumatique (17) annulaire comprenant un matériau élastique, et
l'élément composite de résine-métal (26) pour un pneumatique (10) selon l'une quelconque des revendications 1 à 9.

**11.** Pneumatique (10) selon la revendication 10, l'élément composite de résine-métal (26) pour un pneumatique (10) formant un élément nappe d'armature de renforcement à enrouler autour d'une portion circonférentielle externe de la carcasse de pneumatique (17) dans un sens de la circonférence.

**12.** Pneumatique (10) selon la revendication 10, l'élément composite de résine-métal (26) pour un pneumatique (10) formant un élément de talon.

FIG.1A

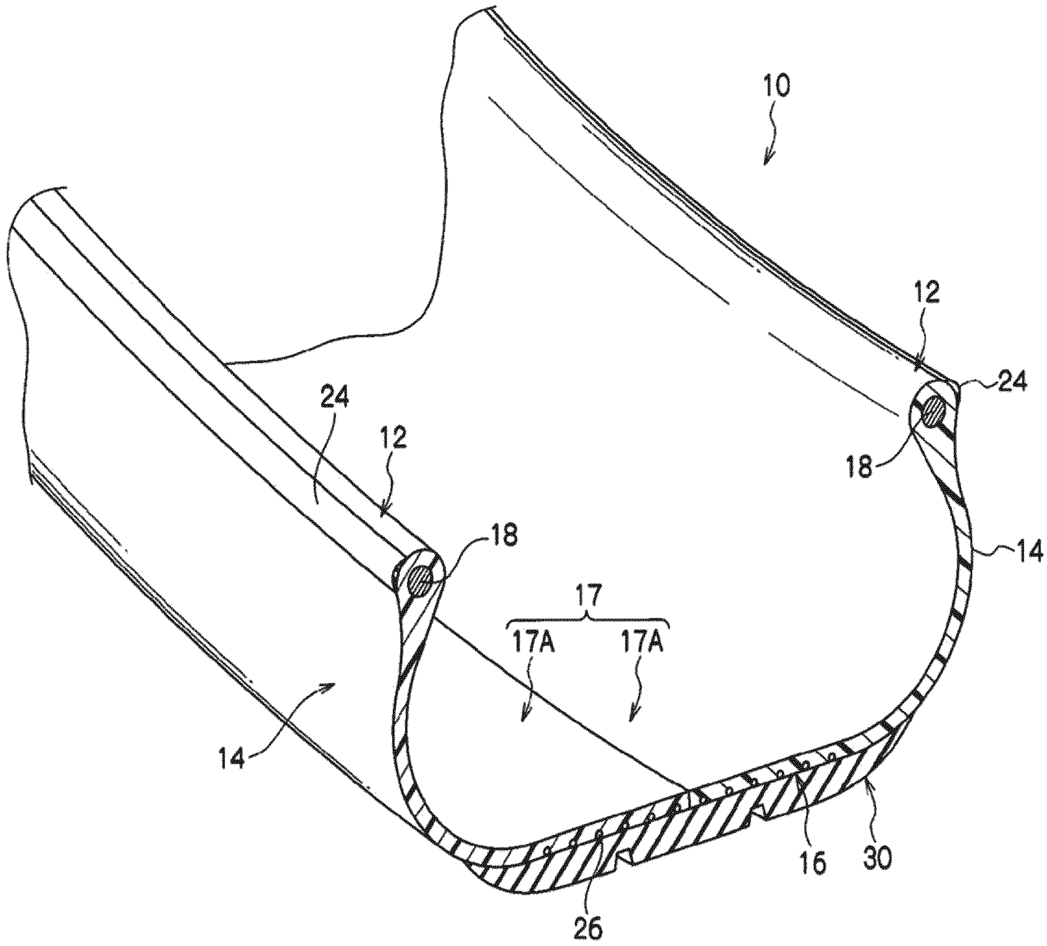


FIG.1B

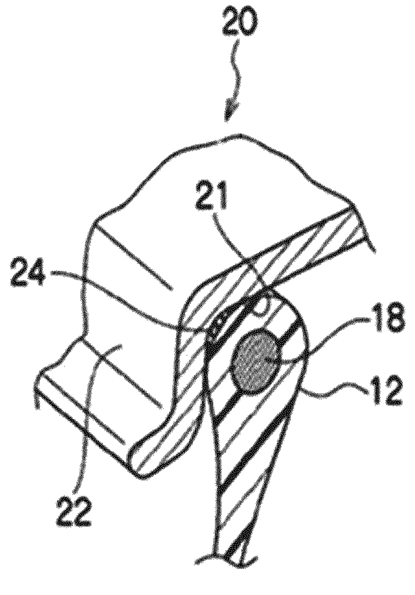

FIG.2

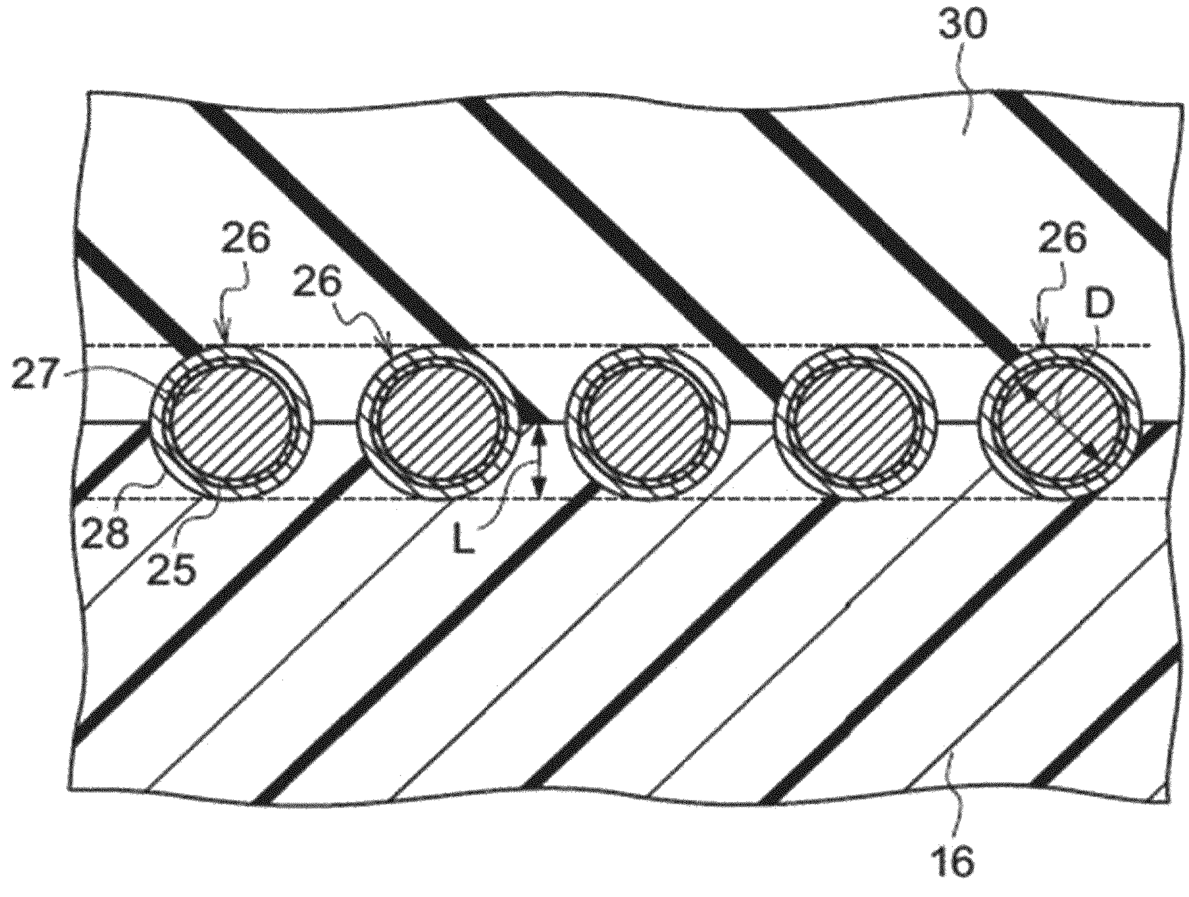

FIG.3

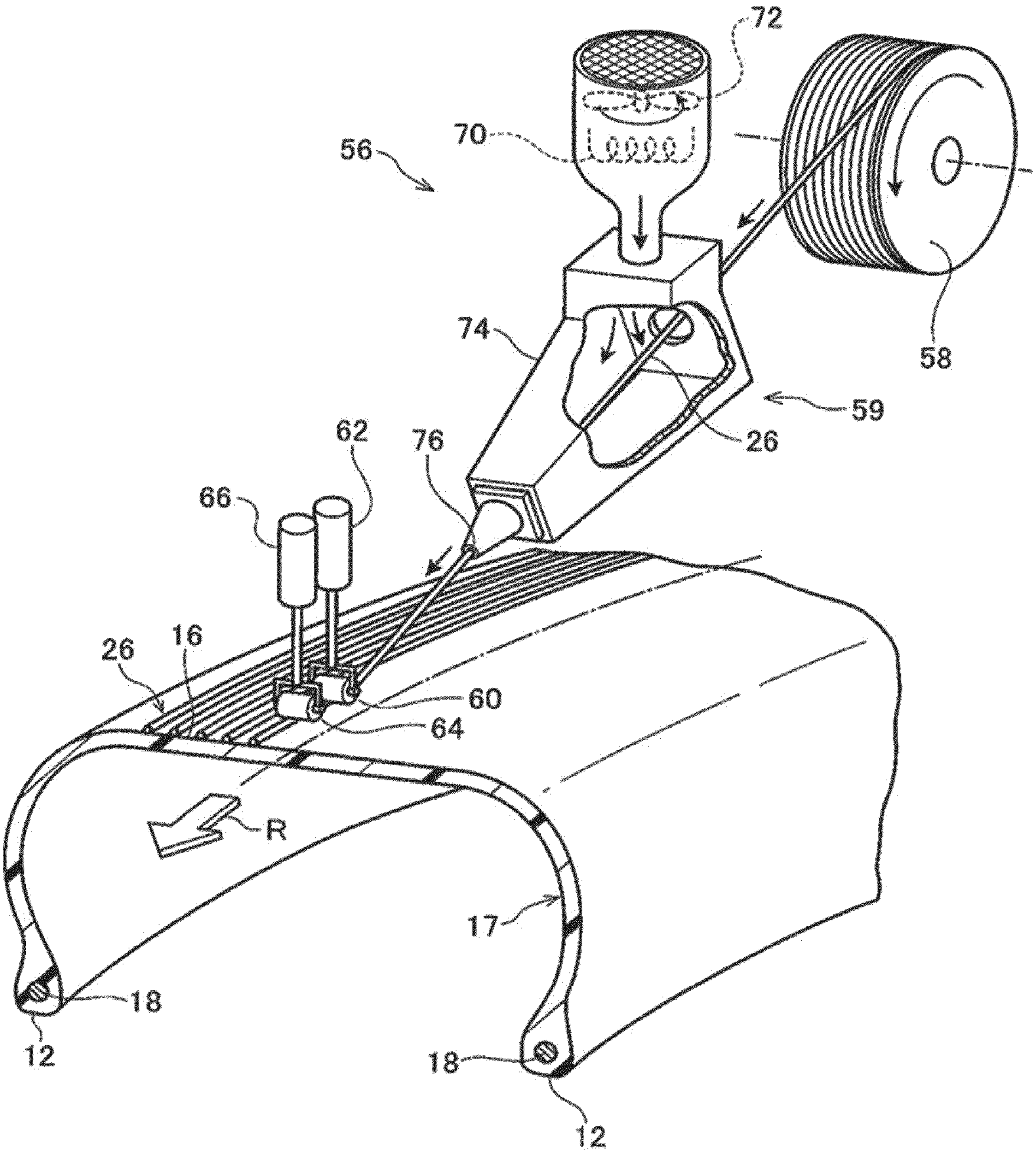

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017002872 A
- EP 2990220 A
- JP 2013082311 A
- JP 2012046025 A
- WO 2012104281 A
- JP 2004346273 A
- JP H5331256 A